# EUROPEAN PATENT APPLICATION

(11) **EP 3 731 508 A1**
(43) Date of publication of application: **28.10.2020**
(21) Application number: 19842772.6
(22) Date of filing: 19.02.2019
(51) Int. Cl.: H04M 1/725, H04M 1/02

(54) **MOBILE TERMINAL AND ELECTRONIC DEVICE INCLUDING MOBILE TERMINAL**

(71) Applicant: LG Electronics Inc., Yeongdeungpo-gu Seoul 07336 (KR)
(72) Inventor: KWON, Jungeun, Seoul 06772 (KR); MOON, Daecho, Seoul 06772 (KR)
(74) Representative: Vossius & Partner Patentanwälte Rechtsanwälte mbB
(86) International application number: PCT/KR2019/001996
(87) International publication number: WO 2020/171251

(57) **Abstract**

The present disclosure relates to a mobile terminal, an electronic device equipped with a case with which the mobile terminal is combined, and a method of controlling the electronic device. Provided is an electronic device including: a mobile terminal; and a case with the mobile terminal is combined, in which the mobile terminal includes a terminal body that is combined with the case; a memory that is positioned in the terminal body, and a first body that includes a first display unit which is combined with the case and that is formed such that the case accommodates at least one portion of the terminal body, a second body in which a second display unit is positioned, and a wiring unit that electrically couples the first body and the second body and that is configured to transfer data received from the mobile terminal, to the second display unit, and in which, based on whether or not the second display unit is activated, a controller of the mobile terminal generates a sub-stack that includes a task associated with the second display unit.

## Description

### TECHNICAL FIELD

The present disclosure relates to a mobile terminal, an electronic device equipped with a case with which the mobile terminal is combined, and a method of controlling the electronic device.

### BACKGROUND ART

Terminals may be divided into mobile/portable terminals and stationary terminals according to mobility. Also, the mobile terminals may be classified into handheld types and vehicle mount types according to whether or not a user can directly carry.

Mobile terminals have become increasingly more functional. Examples of such functions include data and voice communications, capturing images and video via a camera, recording audio, playing music files via a speaker system, and displaying images and video on a display unit. Some mobile terminals include additional functionality which supports electronic game playing, while other terminals are configured as multimedia players. Specifically, in recent time, mobile terminals can receive broadcast and multicast signals to allow viewing of video or television programs.

As it becomes multifunctional, a mobile terminal can be allowed to capture still images or moving images, play music or video files, play games, receive broadcast and the like, so as to be implemented as an integrated multimedia player. On the other hand, a recent trend is to enhance more greatly the ability of the mobile terminal to be used together with an external device that operates in conjunction with the mobile terminal.

### DISCLOSURE

### TECHNICAL PROBLEM

An aspect of the present disclosure is to provide a mobile terminal that is capable of expanding a display area of the mobile terminal through a case equipped with an additional display unit that operates in conjunction with the mobile terminal, and an electronic device equipped with the case with which the mobile terminal is combined.

Another aspect of the present disclosure is to provide a control method that is capable of controlling a display unit provided in a case through wireless communication with a mobile terminal.

Still another aspect of the present disclosure is to provide a control method of efficiently controlling an additional display unit that operates in conjunction with a mobile terminal.

### TECHNICAL SOLUTION

According to an aspect of the present disclosure, there is provided an electronic device including: a mobile terminal; and a case with the mobile terminal is combined, in which the mobile terminal includes a terminal body that is combined with the case; a memory that is positioned in the terminal body, and a first body that includes a first display unit which is combined with the case and that is formed such that the case accommodates at least one portion of the terminal body, a second body in which a second display unit is positioned, and a wiring unit that electrically couples the first body and the second body and that is configured to transfer data received from the mobile terminal, to the second display unit, and in which, based on whether or not the second display unit is activated, a controller of the mobile terminal generates a sub-stack that includes a task associated with the second display unit.

In the electronic device, the controller of the mobile terminal may control the memory of the mobile terminal such that the sub-stack is generated in a case where the second display unit is activated and such that the sub-stack is deleted in a case where the second display unit is inactivated.

The electronic device may further including: a coupling unit that couples the first and second bodies rotatably relative to each other, in which the first display unit and the second display unit may be in any one of a closed state where the first display unit is covered by the second display unit and an opened state where the first display unit is not hidden by the second display unit, in which, based on rotation of the first and second bodies relative to each other, the second display unit that is being driven in an activated state while in the opened state may be inactivated in a case where switching from the opened state to the covered state takes place, and in which, based on the switching from the opened state to the covered state, the sub-stack may be deleted from the memory of the mobile terminal.

In the electronic device, the second display unit may further include a touch sensor that is configured to sense a touch which is applied to the second display unit, in a case where a touch that is applied to the second display unit in the opened state corresponds to a predetermined-type touch, the second display unit may be driven in the activated state, and, based on the touch that corresponds to the predetermined-type touch, the sub-stack may be generated in the memory of the mobile terminal.

In the electronic device, in a case where the first and second display units are both driven in an activated state, the memory of the mobile terminal may include a first main stack for managing a home screen page that is output on the first display unit, and a first sub-stack for managing a home screen page that is output on the second display unit.

In the electronic device, in a case where an icon for a first application, which is included in the home screen page that is output on the first display unit, is selected, the memory may further include a second main stack that includes a first task for performing a function of the first application, and, in a case where an icon for a second application, which is included in a home screen page that is output on the second display unit, is selected, the controller may generate a second sub-stack that includes a second task for performing a function of the second application, in the memory.

In the electronic device, an execution screen for the first application that corresponds to the first task included in the second main stack may be output on the first display unit, and an execution screen for the second application that corresponds to the second task included in the second sub-stack may be output on the second display unit.

In the electronic device, the memory may further include a third main stack for storing history information associated with the first application selected from the first display unit, and a third sub-stack for storing history information associated with the second application selected from the second display unit.

In the electronic device, based on inactivation of the second display unit, the controller may control the memory of the mobile terminal such that the first, second, and third sub-stacks are deleted.

In the electronic device, based on a predetermined-type touch input to the second display unit, the execution screen for the second application, which is output on the second display unit, may move from the second display unit to the first display unit, and, based on the predetermined-type touch input, the controller may move the second task for performing the function of the second application, which is included in the second sub-stack, to the second main stack.

In the electronic device, based on the predetermined-type touch input, the first task for performing the function of the first application and the second task for performing the function of the second application may be aligned in the second main stack, and the second task for performing the function of the second application may be deleted from the second sub-stack.

In the electronic device, in response to reception of a predetermined-type control command, the controller may perform switching between the execution screen for the first application that is output on the first display unit and the execution screen for the second application that is output on the second display unit, and, based on the predetermined-type control command, the first task for performing the function of the first application, which is included in the second main stack may be moved to the second sub-stack, and the second task for performing the function of the second application, which is included in the second sub-stack, may be moved to the second main stack.

In the electronic device, the mobile terminal may further include a first wireless communication unit that transmits a wireless signal to a rear side of the terminal body, the case may include a second wireless communication unit that is positioned to face the first wireless communication unit in the first body and receives the wireless signal, and the controller of the mobile terminal may transfer data included in the sub-stack to the second display unit through an electrical coupling path that is formed by the first wireless communication unit, the second wireless communication unit, and the wiring unit.

In the electronic device, screen information that is to be output on the second display unit may be transferred from the sub-stack included in the memory of the mobile terminal to the second display unit through the first wireless communication unit, the second wireless communication unit, and the wiring unit.

In the electronic device, a magnet may be provided on one surface of the first body, which faces the mobile terminal, a hall sensor, which is formed such that a magnetic field corresponding to the magnet is sensed in a case where the terminal body is combined with the first body, may be included a rear side of the mobile terminal, and, in a case where the magnetic field corresponding the magnet is sensed through the hall sensor, the controller of the mobile terminal may supply electric current for operation to the second display unit through the wiring unit.

### ADVANTAGEOUS EFFECT

In accordance with the detailed description, an electronic device equipped with a mobile terminal according to the present disclosure includes a case that includes a first body with which the mobile terminal is combined and a second body in which a display unit is provided. The case includes a wireless communication unit such that wireless communication with the mobile terminal is possible, and the display unit provided in the second body can transmit and receive a control signal and data to and from the mobile terminal through the wireless communication unit provided in the case. Hence, according to the present disclosure, although a separate setting is not performed in order to control the display unit provided in the second body, communication with the communication unit provided in the second body can be performed only by combining the mobile terminal with the case.

In addition, in the mobile terminal and the electronic device equipped with the mobile terminal according to the present disclosure, memory for controlling the display unit provided in the electronic device is allocated in a memory of the mobile terminal, and thus a display provided in the electronic device can be integrally controlled through the mobile terminal.

In more detail, in the mobile terminal according to the present disclosure, a stack for controlling a function of the mobile terminal and a stack for controlling a function and a screen of the display provided in the electronic device can be separately allocated in the memory. Hence, according to the present disclosure, the display units that are provided in the mobile terminal and the electronic device, respectively, can be controlled independently of each other. That is, according to the present disclosure, the display units that are provided in the mobile terminal and the electronic device, respectively, can individually perform different functions. Hence, a user can be provided with a plurality of functions, whenever needed, through a plurality of displays that are electrically combined with each other.

### BRIEF DESCRIPTION OF THE DRAWINGS

FIGs. 1A and 1B are views for describing an electronic apparatus according to the present embodiment.
FIGs. 2A, 2B, and 2C are conceptual views for describing an essential structure of the electronic device according to the present disclosure.
FIGS. 3A, 3B, and 3C are conceptual views illustrating an example of a mobile terminal according to the present disclosure.
FIG. 4 is a view for describing a method of control between display units that are provided in a mobile terminal and a case, respectively, in the electronic device according to the present disclosure.
FIG. 5 is a flowchart for describing the method of control between the display units that are provided in the mobile terminal and the case, respectively, in the electronic device according to the present disclosure.
FIGs. 6A and 6B are conceptual views for describing a memory control method according to the present disclosure.
FIG. 7 is a conceptual view for describing a scene where a home screen page is output in the electronic device according to the present disclosure.
FIG. 8 is a flowchart for describing the method of control between the display units that are provided in the mobile terminal and the case, respectively, in the electronic device according to the present disclosure.
FIGs. 9A, 9B, 10A, 10B, 11A, 11B, 12A, 12B, 13A, 13B, 13C, 14A, 14B, and 14C are conceptual views for describing a memory allocation method according to the present disclosure.

### MODES FOR CARRYING OUT THE PREFERRED EMBODIMENTS

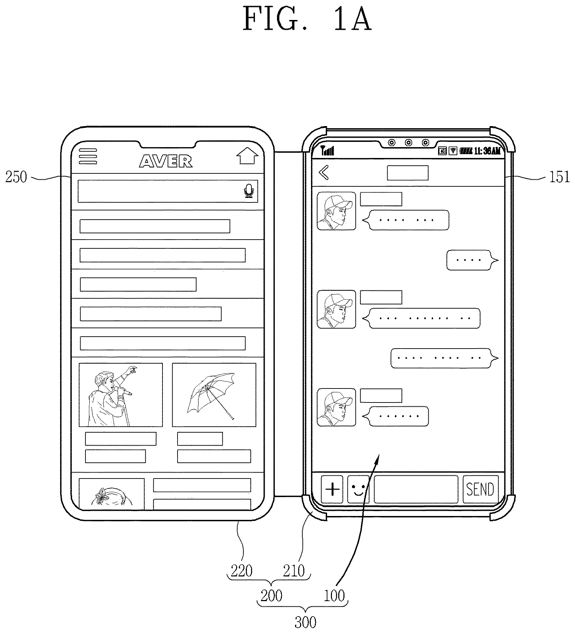

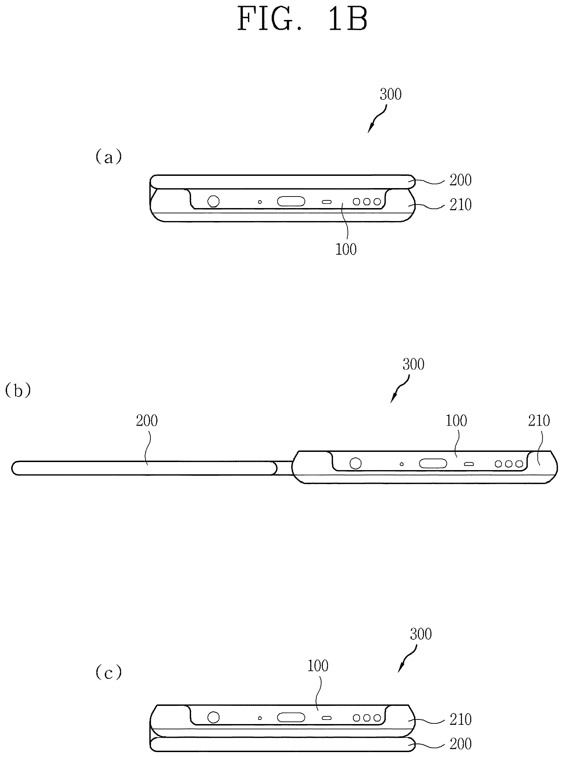

FIGs. 1A and 1B are views for describing an electronic device according to the present embodiment.

Referring to FIGs. 1A and 1B, a mobile terminal 100 is combined with a case 200, and the mobile terminal 100 and the case 200 are combined to form one electronic device 300.

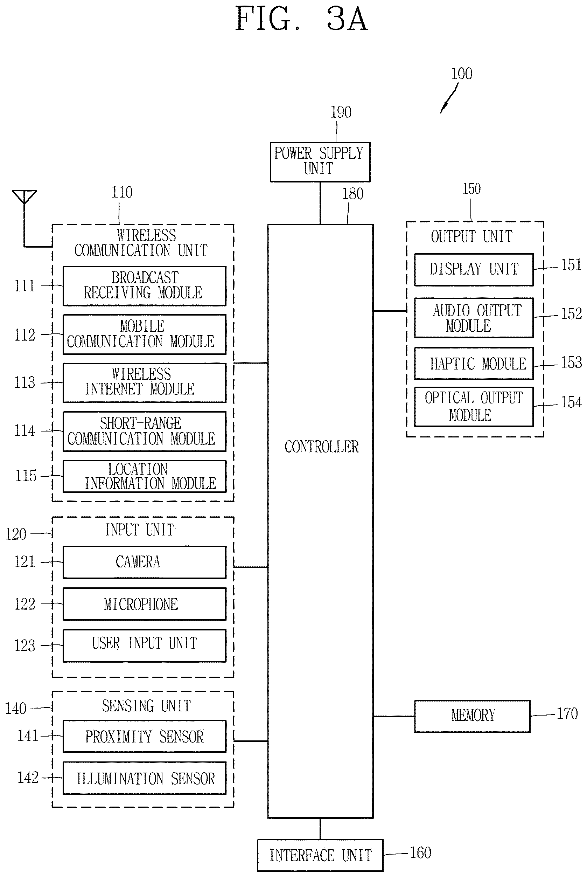

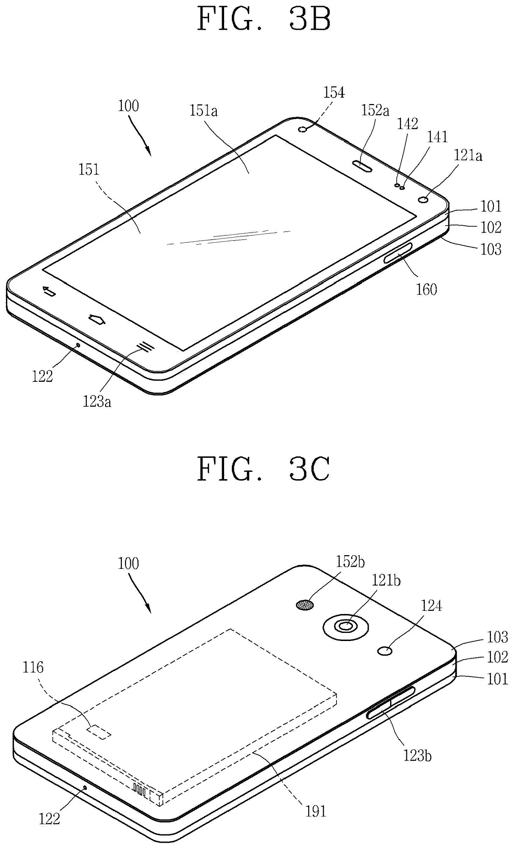

In this case, the mobile terminals may include cellular phones, smart phones, laptop computers, digital broadcast terminals, personal digital assistants (PDAs), portable multimedia players (PMPs), navigators, slate PCs, tablet PCs, ultrabooks, wearable devices (for example, smart watches, smart glasses, head mounted displays (HMDs)), and the like. The mobile terminal will be described in detail below referring to FIG. 3.

The case 200 may be a pouch that protects the appearance of the mobile terminal 100 or covers or accommodates at least one surface of the mobile terminal 100, as an accessory to the mobile terminal 100. The case 200 may be configured to be combined with the mobile terminal in order to expand a range of functions of the mobile terminal 100.

On the other hand, according to the present disclosure, information that is output in the mobile terminal may be processed in connection with a structure or function of the case 200. As an example of this, referring to FIG. 1A, a display unit (hereinafter referred to as "second display unit 250) that operates in conjunction with the display unit (hereinafter referred to as "first display unit 151) of the mobile terminal may be provided in the case 200.

The case includes first and second bodies 210 and 220 that are coupled in a manner that is rotatable relative to each other, and the second display unit 250 may be positioned on any one of the first and second bodies 210 and 220.

For example, the first body 210 may be formed to accommodate at least one portion of the mobile terminal body. A rear side of the mobile terminal is accommodated in the first body 210, and the first display unit 151 that is positioned on a front side of the mobile terminal is exposed to the outside.

In this case, the mobile terminal 100 may be detachably combined with the first body 210. Also, the mobile terminal may be formed to detect whether or not it is combined with the first body 210. For the detection, a magnet 245 may be provided on one surface of the first body 210, which faces the mobile terminal 100, and a hall sensor 143, which is formed such that a magnetic field corresponding to the magnet 245 is sensed in a case where the body of the mobile terminal is combined with the first body, may be included on the rear side of the mobile terminal. When the hall sensor senses the magnetic field, the mobile terminal may recognize that the mobile terminal is combined with the case and may perform predetermined control.

For example, when the magnetic field is sensed by the hall sensor 143, a controller 180 of the mobile terminal 100 may control a power supply unit 190 such that electric current for operation is supplied to the second display unit 250 that is provided in the second body 220.

That is, the second display unit 250 that is provided in the second body 220 may be configured to operate on power that is supplied from the mobile terminal 100.

On the other hand, the second display unit 250 may be positioned in the second body 220 and may perform a function of expanding a display area of the first display unit 151 or may be driven independently of the first display unit 151. For example, contents associated with information that is output to the first display unit 151 may be mirrored and be output on the second display unit 250.

Also, execution screens of different applications may be output on the first and second display units 151 and 250, respectively. As another example, it is also possible that the execution screen for one application is divided into areas and thus that the areas are displayed on the first and second display units 151 and 250, respectively.

On the other hand, the first and second display units 151 and 250 may be exposed together in an opened state to the outside, and the opened state may be defined referring to FIG. 1B.

In addition, the mobile terminal 100 may be configured to control screen information that is output on the second display unit 250. To do this, at least one of wired and wireless communication links may be established between the mobile terminal 100 and the second display unit 250.

Also, the mobile terminal 100 may be configured such that the electric current for operation is supplied to the second display unit 250, and the electric current for operation may be supplied from the mobile terminal 100 to the second display unit 250 through a wiring line provided in the case 200.

Referring to FIG. 1B, the first and second bodies 210 and 220 of the case 200 may be rotated relative to each other from a closed state to a completely-opened state.

The closed state refers to a state where the first body 210 of the case 200 covers the first display unit 151 of the mobile terminal 100, as a state that is illustrated in (a) of FIG. 1B, and the first display unit 151 is hidden by the first body 210. That is, the state where the first display unit 151 is covered by the second display unit 250 may be the closed state. In the closed state, the mobile terminal 100 and the case 200 overlap each other in the thickness direction of the mobile terminal, and thus takes the form of a diary, thereby improving the portability for a user.

Also, in this case, front surfaces of the first and second display units 151 and 250 face each other. The front surfaces may be external surface on which time information are displayed and through which a touch input is received.

The second body 220 is rotated with respect to the first body 210 in the closed state and switches to the opened state. The opened state may refer to a state where an angle that the first and second display units 151 and 250 make with respect with each other is a specific angle that is not 0 degrees, as a state where the first display unit is not hidden by the second display unit 250.

(b) of FIG. 1B illustrates a state where the first and second display units 151 and 250 make an angle of 180 degrees with respect to each other in the opened state. FIG.1A, which is referred to above, illustrates the state where the first and second display units 151 and 250 make an angle of 180 degrees with respect to each other. Also, the first and second bodies 210 and 220 are fixed at a specific angle in the opened state, and, to do this, a fixation means may be provided in the case 220.

Referring to (c) of FIG. 1B, the first and second bodies 210 and 220 may rotate by up to 360 degrees relative to each other, and this opened state may be defined as a completely-opened state. In this case, outer surfaces of the first and second bodies 210 and 220 are brought into contact with each other, and each of the first and second display units 151 and 250 is positioned to face toward the outside. That is, the first and second display units 151 and 250 face in opposite directions.

On the other hand, the mobile terminal may be formed to detect the closed state and the opened state. As an example of this, the mobile terminal may include an illumination sensor that is configured to sense ambient illumination, and the controller 180 of the mobile terminal 100 may sense any one of the closed state and the opened state according to illumination that is sensed by the illumination sensor.

In addition, the controller 180 may separately detect the completely-opened state that is among the opened states.

An electronic device 300 according to the present disclosure may perform an operation of controlling the first and second display units 151 and 250 in conjunction with the opened state and the closed state. As an example of this, the first and second display units 151 and 250 may be driven in an inactivated state while in the closed state, and in a case where switching from the closed state to the opened state takes place, at least one of the first and second display units 151 and 250 may be activated.

As an example, in a case where the switching to the opened state takes place, both the first and second display units 151 and 250 may switch to an activated state. At this time, different home screen pages may be output on the first and second display units 151 and 250, respectively, and the same home screen page may be displayed in a divided manner on the first and second display units 151 and 250. Additionally, depending on the situation, various pieces of information may be output on the first and second display units 151 and 250.

As another example, in the case where the switching to the opened state takes place, the first display unit 151 may switch to the activated state, and the second display unit 250 may maintain the inactivated state.

The second display unit 250 may include a touch sensor that is configured to sense a touch which is applied to the second display unit 250.

The second display unit 250 may be configured to sense the touch even in the inactivated state.

Regarding the touch sensing by the touch sensor, in a case where the touch that is applied to the second display unit 250 corresponds to a predetermined-type touch, the second display unit 250 may be driven in the activated state while in the opened state.

On the other hand, in a case where a touch is applied to the second display unit 250, the second display unit 250 may transfer a touch signal corresponding to the touch, to the mobile terminal 100. Then, in a case where the touch to which the received touch signal corresponds is a predetermined-type touch, the mobile terminal 100 may transfer a signal that corresponds to a control command to activate the second display unit 250 to the second display unit 250 side.

Then, a controller of the second display unit 250 activates the second display unit 250 based on the signal that is received from the mobile terminal 100.

On the other hand, the case may employ a new structure in order to implement operation of the above-described electronic device. The new structure of the case will be described in more detail below.

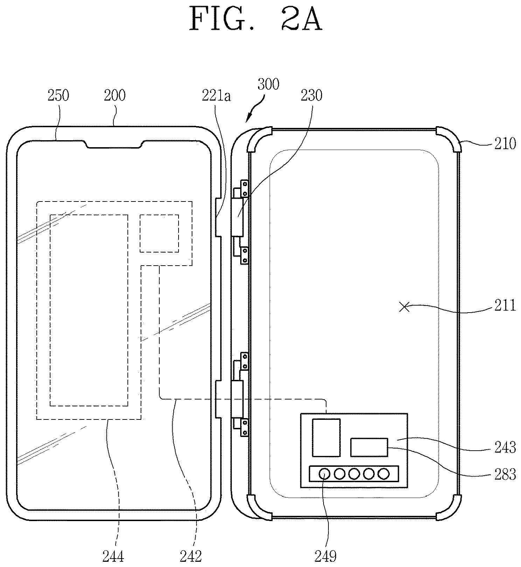

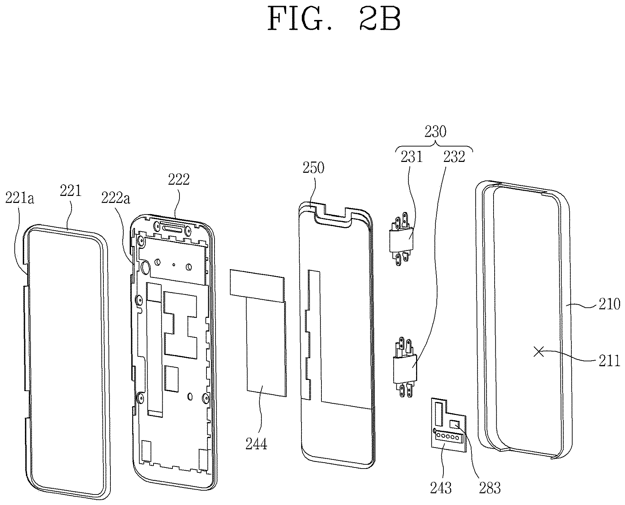

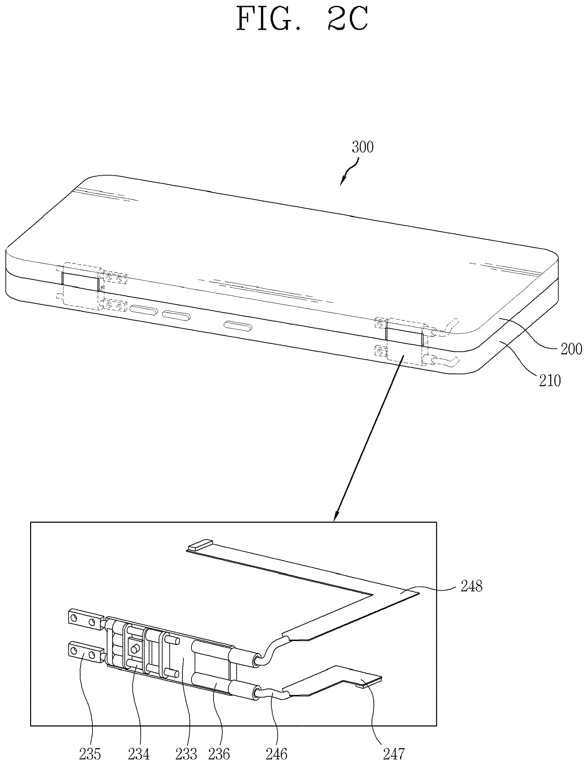

FIGs. 2A, 2B, and 2C are conceptual views for describing an essential structure of the electronic device according to the present disclosure.

The first body 210 of the case 200 has an accommodation space 211 that is configured to accommodate a rear surface of the body of the mobile terminal. The accommodation space 211 in the first body accommodates at least one portion of the mobile terminal, and the rear surface of the mobile terminal is positioned on a bottom surface of the accommodation space 211. However, the present disclosure is not necessarily limited to this, and for example, the first body may be formed in the form of a plate that is combined with the rear surface of the mobile terminal or may be configured to be combined a side surface of the mobile terminal.

With a coupling unit 230, the second body 220 in which the second display unit 250 is positioned is rotatably combined with the first body. That is, the coupling unit 230 is positioned between the first and second bodies 210 and 220 and combines the first and second bodies 210 and 220 such that they is rotatable relative to each other.

Referring to FIGs. 2A, 2B, and 2C, the second body 220 may include a first cover 221, a second cover 222, and the second display unit 250. An accommodation groove 221a in which at least one portion of the coupling unit 230 is accommodated may be formed in the first cover 221. Also, the second cover 222 may be a frame with which the first cover 221 is combined and on which various electronic components are mounted. As an example of this, a second circuit board that will be described below may be mounted on the second cover 222.

The second cover 222 may be rotatably combined with the coupling unit 230. A groove 222a may be formed in a position on the second cover 222, which corresponds to the accommodation groove 221a in the first cover 221. The coupling unit 230 may be positioned in the groove 222a. In this case, the second display unit 250 is mounted on the second cover 222.

The coupling unit 230 may include first and second hinges 231 and 232 that are arranged apart along a side surface of the first body 210. Each of the first and second hinges 231 and 232 may include a hinge body 233 and a hinge shaft 234.

A hinge groove (not illustrated) is formed in the hinge body 233. The hinge shaft 234 is inserted into the hinge groove, and thus the first and second bodies 210 and 220 are possibly rotated relative to each other. A plurality of hinge shafts 234 may be provided, and a combining unit 235 that is combined with each of the first and second bodies 210 and 220 may be positioned on one side of the hinge shaft 234.

At this time, the case 200 includes a wireless communication unit 283 and a wiring unit 242, and thus, the mobile terminal 100 can control the second display unit 250.

The wireless communication unit 283 is positioned in the first body 21 and performs short-distance wireless communication with the mobile terminal. A wireless communication unit (hereinafter referred to as "second wireless communication") in the case 200 and a wireless communication unit (hereinafter referred to as "first wireless communication unit") that performs short-distance wireless communication are arranged in the mobile terminal 100.

The first wireless communication unit 116 (refer to FIG. 3C) transmits a wireless signal to the rear side of the mobile terminal 100. The second wireless communication unit 283 is positioned in the first body 210 to face the first wireless communication unit 116 and thus receives the wireless signal. The first wireless communication unit 116 and the second wireless communication unit 283, for example, may include Keyssa chips each of which transmits and receives wireless data, and the Keyssa chips may be arranged apart at distances of several centimeters or less along the thickness direction of the mobile terminal. Hence, using a short-range communication scheme in which a transfer distance is approximately several centimeters, the first wireless communication unit 116 and the second wireless communication unit 283 perform communication.

As illustrated, the first body 210 may include a first circuit board 243 on which the second wireless communication unit 283 is positioned. The second body 210 may include a second circuit board 244 that is positioned under the second display unit 250 and is electrically connected to the first circuit board 243 by the wiring unit 242. The second circuit board 244 may be coupled to the second display unit 250 and thus may perform a function of transferring a control signal received from the mobile terminal 100, to the second display unit 250.

That is, the second circuit board 244 may transfer data that is transmitted and received between the first wireless communication unit 116 and the second wireless communication unit 283, to the second display unit 250.

The wiring unit 242 is a component that electrically couples the first and second bodies 210 and 220 through the coupling unit 230. A wireless signal (or data) that is received through the mobile terminal 100 and the short-distance wireless communication may be transferred to the second display unit 250 through the wiring unit 242. For this coupling, a coupling path along which the wiring unit 242 pass may be formed in the coupling unit 230.

As an example of this, an accommodation space that accommodates at least one portion of the wiring unit 242 is formed in any one of the first and second hinges 231 and 232. In more detail, the first hinge 231 may be positioned more toward an upper side of the mobile terminal than the second hinge 232, and the second hinge 232 may be positioned more toward a lower side of the mobile terminal 100 than the first hinge 231. The second circuit board 244 is positioned adjacent to a lower side end of the case 200, and thus each of the first wireless communication unit 116 and the second wireless communication unit 283 is positioned in the case 200 or under the mobile terminal 100.

In this structure, the accommodation space may be formed in the second hinge 232. The second hinge 232 may include an extension portion 236 that extends from the hinge body 233, and the cable 246 that extends to each of the first body 210 and the second body 220 may be provided to the extension portion 236. A structure is employed in which the accommodation space is formed in the extension portion 236 and in which the cable 246 is accommodated in the accommodation space. first and second flexible printed circuit boards 247 and 248 are positioned at both ends, respectively, of the cable 246, and the first and second flexible printed circuit boards 247 and 248 are electrically coupled to the first and second circuit boards 243 and 244, respectively. In this structure, a signal that controls the second display unit 250 may be transferred in a wireless manner from the mobile terminal to the first body 210 and be transferred in a wired manner to the second body 220.

On the other hand, referring to FIGs. 2A, 2B, and 2C, a power terminal (for example, a pogo-pin) 249 that is brought into contact with a power supply terminal (not illustrated) of the mobile terminal may be positioned on the first circuit board 243 such that power is supplied from the mobile terminal. The power terminal 249 is electrically coupled to the wiring unit 242 such that power is supplied to the second display unit 250. In this structure, the power that is supplied to the second display unit 250 can be transferred through a wired path in the mobile terminal.

In the above-described structure, the electronic device performs an operation of controlling the first and second display units 151 and 250 in conjunction with each other through short-distance wireless communication along a wired power supply path. A structure and a function of the mobile terminal will be described in detail below, and the control operation will be subsequently described.

FIGS. 3A, 3B, and 3C are conceptual views illustrating an example of a mobile terminal related to the present disclosure. The mobile terminal 100 according to the present disclosure may be coupled to the case of the above-described electronic device.

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

Referring to FIGS. 3A to 3C, FIG. 3A is a block diagram of a mobile terminal in accordance with one exemplary embodiment of the present disclosure, and FIGS. 3B and 3C are conceptual views illustrating one example of a mobile terminal, viewed from different directions.

The mobile terminal 100 may be shown having components such as a wireless communication unit 110, an input unit 120, a sensing unit 140, an output unit 150, an interface unit 160, a memory 170, a controller (or control unit) 180, and a power supply unit 190. It is understood that implementing all of the illustrated components is not a requirement, and that greater or fewer components may alternatively be implemented.

In more detail, the wireless communication unit 110 may typically include one or more modules which permit communications such as wireless communications between the mobile terminal 100 and a wireless communication system, communications between the mobile terminal 100 and another mobile terminal, or communications between the mobile terminal 100 and an external server. Further, the wireless communication unit 110 may typically include one or more modules which connect the mobile terminal 100 to one or more networks.

The wireless communication unit 110 may include one or more of a broadcast receiving module 111, a mobile communication module 112, a wireless Internet module 113, a short-range communication module 114, and a location information module 115.

The input unit 120 may include a camera 121 or an image input unit for obtaining images or video, a microphone 122, which is one type of audio input device for inputting an audio signal, and a user input unit 123 (for example, a touch key, a mechanical key, and the like) for allowing a user to input information. Data (for example, audio, video, image, and the like) may be obtained by the input unit 120 and may be analyzed and processed according to user commands.

The sensing unit 140 may typically be implemented using one or more sensors configured to sense internal information of the mobile terminal, the surrounding environment of the mobile terminal, user information, and the like. For example, the sensing unit 140 may include at least one of a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like). The mobile terminal disclosed herein may be configured to utilize information obtained from one or more sensors of the sensing unit 140, and combinations thereof.

The output unit 150 may typically be configured to output various types of information, such as audio, video, tactile output, and the like. The output unit 150 may be shown having at least one of a display unit 151, an audio output module 152, a haptic module 153, and an optical output module 154. The display unit 151 may have an inter-layered structure or an integrated structure with a touch sensor in order to implement a touch screen. The touch screen may function as the user input unit 123 which provides an input interface between the mobile terminal 100 and the user and simultaneously provide an output interface between the mobile terminal 100 and a user.

The interface unit 160 serves as an interface with various types of external devices that are coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). Application programs may be stored in the memory 170, installed in the mobile terminal 100, and executed by the controller 180 to perform an operation (or function) for the mobile terminal 100.

The controller 180 typically functions to control an overall operation of the mobile terminal 100, in addition to the operations associated with the application programs. The controller 180 may provide or process information or functions appropriate for a user by processing signals, data, information and the like, which are input or output by the aforementioned various components, or activating application programs stored in the memory 170.

Also, the controller 180 may control at least some of the components illustrated in FIG. 1A, to execute an application program that have been stored in the memory 170. In addition, the controller 180 may control at least two of those components included in the mobile terminal 100 to activate the application program.

The power supply unit 190 may be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least part of the components may cooperatively operate to implement an operation, a control or a control method of a mobile terminal according to various embodiments disclosed herein. Also, the operation, the control or the control method of the mobile terminal may be implemented on the mobile terminal by an activation of at least one application program stored in the memory 170.

Hereinafter, description will be given in more detail of the aforementioned components with reference to FIG. 1A, prior to describing various embodiments implemented through the mobile terminal 100.

First, regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules may be utilized to facilitate simultaneous reception of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like).

The wireless signal may include various types of data depending on a voice call signal, a video call signal, or a text / multimedia message transmission / reception.

The wireless Internet module 113 refers to a module for wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), High Speed Uplink Packet Access (HSUPA), Long Term Evolution (LTE), LTE-advanced (LTE-A) and the like. The wireless Internet module 113 may transmit/receive data according to one or more of such wireless Internet technologies, and other Internet technologies as well.

When the wireless Internet access is implemented according to, for example, WiBro, HSDPA, HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

Here, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position (or current position) of the mobile terminal. As an example, the location information module 115 includes a Global Position System (GPS) module, a Wi-Fi module, or both. For example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module. If desired, the location information module 115 may alternatively or additionally function with any of the other modules of the wireless communication unit 110 to obtain data related to the position of the mobile terminal. The location information module 115 is a module used for acquiring the position (or the current position) and may not be limited to a module for directly calculating or acquiring the position of the mobile terminal.

Examples of such inputs include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. Meanwhile, the cameras 121 may be arranged in a matrix configuration to permit a plurality of images having various angles or focal points to be input to the mobile terminal 100. Also, the cameras 121 may be located in a stereoscopic arrangement to acquire left and right images for implementing a stereoscopic image.

The microphone 122 processes an external audio signal into electric audio (sound) data. The processed audio data can be processed in various manners according to a function being executed in the mobile terminal 100. If desired, the microphone 122 may include assorted noise removing algorithms to remove unwanted noise generated in the course of receiving the external audio signal.

The user input unit 123 is a component that permits input by a user. Such user input may enable the controller 180 to control operation of the mobile terminal 100. The user input unit 123 may include one or more of a mechanical input element (for example, a mechanical key, a button located on a front and/or rear surface or a side surface of the mobile terminal 100, a dome switch, a jog wheel, a jog switch, and the like), or a touch-sensitive input element, among others. As one example, the touch-sensitive input element may be a virtual key, a soft key or a visual key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like, and generate a corresponding sensing signal. The controller 180 generally cooperates with the sending unit 140 to control operations of the mobile terminal 100 or execute data processing, a function or an operation associated with an application program installed in the mobile terminal based on the sensing signal. The sensing unit 140 may be implemented using any of a variety of sensors, some of which will now be described in more detail.

The proximity sensor 141 refers to a sensor to sense presence or absence of an object approaching a surface, or an object located near a surface, by using an electromagnetic field, infrared rays, or the like without a mechanical contact. The proximity sensor 141 may be arranged at an inner area of the mobile terminal covered by the touch screen, or near the touch screen.

When the touch screen is implemented as a capacitance type, the proximity sensor 141 can sense proximity of a pointer relative to the touch screen by changes of an electromagnetic field, which is responsive to an approach of an object with conductivity. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like). In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data (or information) according to whether a touch with respect to a point on the touch screen is either a proximity touch or a contact touch.

A touch sensor senses a touch (or a touch input) applied to the touch screen (or the display unit 151) using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which area of the display unit 151 has been touched. Here, the touch controller may be a component separate from the controller 180, the controller 180, and combinations thereof.

Meanwhile, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches include a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize location information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121, which has been depicted as a component of the input unit 120, typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors (TRs) at rows and columns to scan content received at the photo sensor using an electrical signal which changes according to the quantity of applied light. Namely, the photo sensor may calculate the coordinates of the physical object according to variation of light to thus obtain location information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

Also, the display unit 151 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 may receive audio data from the wireless communication unit 110 or output audio data stored in the memory 170 during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceives, or otherwise experiences. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal therethrough. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a flash memory type, a hard disk type, a solid state disk (SSD) type, a silicon disk drive (SDD) type, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control operations relating to application programs and the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provides internal power and supply the appropriate power required for operating respective elements and components included in the wearable device 100 under the control of the controller 180. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring to FIGS. 1B and 1C, the disclosed mobile terminal 100 includes a bar-like terminal body. However, the mobile terminal 100 may alternatively be implemented in any of a variety of different configurations. Examples of such configurations include watch type, clip-type, glasses-type, or a folder-type, flip-type, slide-type, swing-type, and swivel-type in which two and more bodies are combined with each other in a relatively movable manner, and combinations thereof. Discussion herein will often relate to a particular type of mobile terminal. However, such teachings with regard to a particular type of mobile terminal will generally apply to other types of mobile terminals as well.

Here, considering the mobile terminal 100 as at least one assembly, the terminal body may be understood as a conception referring to the assembly.

The mobile terminal 100 will generally include a case (for example, frame, housing, cover, and the like) forming the appearance of the terminal. In this embodiment, the case is formed using a front case 101 and a rear case 102. Various electronic components are interposed into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. In this case, a rear cover 103 is shown covering the electronic components, and this cover may be detachably coupled to the rear case 102. Therefore, when the rear cover 103 is detached from the rear case 102, the electronic components mounted on the rear case 102 are exposed to the outside.

As illustrated, when the rear cover 103 is coupled to the rear case 102, a side surface of the rear case 102 may partially be exposed. In some cases, upon the coupling, the rear case 102 may also be completely shielded by the rear cover 103. Meanwhile, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this case, a mobile terminal 100 having a uni-body is formed in such a manner that synthetic resin or metal extends from a side surface to a rear surface.

Meanwhile, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may include a display unit 151, first and second audio output module 152a and 152b, a proximity sensor 141, an illumination sensor 142, an optical output module 154, first and second cameras 121a and 121b, first and second manipulation units 123a and 123b, a microphone 122, an interface unit 160, and the like.

Hereinafter, as illustrated in FIGS. 1B and 1C, description will be given of the exemplary mobile terminal 100 in which the front surface of the terminal body is shown having the display unit 151, the first audio output module 152a, the proximity sensor 141, the illumination sensor 142, the optical output module 154, the first camera 121a, and the first manipulation unit 123a, the side surface of the terminal body is shown having the second manipulation unit 123b, the microphone 122, and the interface unit 160, and the rear surface of the terminal body is shown having the second audio output module 152b and the second camera 121b.

However, those components may not be limited to the arrangement. Some components may be omitted or rearranged or located on different surfaces. For example, the first manipulation unit 123a may be located on another surface of the terminal body, and the second audio output module 152b may be located on the side surface of the terminal body other than the rear surface of the terminal body.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

The display module 151 may include at least one of a liquid crystal display (LCD), a thin film transistor-LCD (TFT LCD), an organic light-emitting diode (OLED), a flexible display, a three-dimensional (3D) display and an e-ink display.

The display unit 151 may be implemented using two display devices, according to the configuration type thereof. For instance, a plurality of the display units 151 may be arranged on one side, either spaced apart from each other, or these devices may be integrated, or these devices may be arranged on different surfaces.

The display unit 151 may include a touch sensor that senses a touch with respect to the display unit 151 so as to receive a control command in a touch manner. Accordingly, when a touch is applied to the display unit 151, the touch sensor may sense the touch, and a controller 180 may generate a control command corresponding to the touch. Contents input in the touch manner may be characters, numbers, instructions in various modes, or a menu item that can be specified.

On the other hand, the touch sensor may be configured in a form of a film having a touch pattern and disposed between a window 151a and a display (not illustrated) on a rear surface of the window, or may be a metal wire directly patterned on the rear surface of the window. Alternatively, the touch sensor may be formed integrally with the display. For example, the touch sensor may be disposed on a substrate of the display, or may be provided inside the display.

In this way, the display unit 151 may form a touch screen together with the touch sensor, and in this case, the touch screen may function as the user input unit (123, see FIG. 1A). In some cases, the touch screen may replace at least some of functions of a first manipulation unit 123a.

The first audio output module 152a may be implemented as a receiver for transmitting a call sound to a user's ear and the second audio output module 152b may be implemented as a loud speaker for outputting various alarm sounds or multimedia reproduction request sounds.

The window 151a of the display unit 151 may include a sound hole for emitting sounds generated from the first audio output module 152a. However, the present disclosure is not limited thereto, and the sounds may be released along an assembly gap between the structural bodies (for example, a gap between the window 151a and the front case 101). In this case, a hole independently formed to output audio sounds may not be seen or may otherwise be hidden in terms of appearance, thereby further simplifying the appearance of the mobile terminal 100.

The optical output module 154 may be configured to output light for indicating an event generation. Examples of such events may include a message reception, a call signal reception, a missed call, an alarm, a schedule alarm, an email reception, information reception through an application, and the like. When a user has checked a generated event, the controller 180 may control the optical output module 154 to stop the light output.

The first camera 121a may process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion. The first and second manipulation units 123a and 123b may employ any method if it is a tactile manner allowing the user to perform manipulation with a tactile feeling such as touch, push, scroll or the like. The first and second manipulation units 123a and 123b may also be manipulated through a proximity touch, a hovering touch, and the like, without a user's tactile feeling.

The drawings are illustrated on the basis that the first manipulation unit 123a is a touch key, but the present disclosure may not be necessarily limited to this. For example, the first manipulation unit 123a may be configured with a mechanical key, or a combination of a touch key and a push key.

The content received by the first and second manipulation units 123a and 123b may be set in various ways. For example, the first manipulation unit 123a may be used by the user to input a command such as menu, home key, cancel, search, or the like, and the second manipulation unit 123b may be used by the user to input a command, such as controlling a volume level being output from the first or second audio output module 152a or 152b, switching into a touch recognition mode of the display unit 151, or the like.

On the other hand, as another example of the user input unit 123, a rear input unit (not shown) may be disposed on the rear surface of the terminal body. The rear input unit may be manipulated by a user to input a command for controlling an operation of the mobile terminal 100. The content input may be set in various ways. For example, the rear input unit may be used by the user to input a command, such as power on/off, start, end, scroll or the like, controlling a volume level being output from the first or second audio output module 152a or 152b, switching into a touch recognition mode of the display unit 151, or the like. The rear input unit may be implemented into a form allowing a touch input, a push input or a combination thereof.

The rear input unit may be disposed to overlap the display unit 151 of the front surface in a thickness direction of the terminal body. As one example, the rear input unit may be disposed on an upper end portion of the rear surface of the terminal body such that a user can easily manipulate it using a forefinger when the user grabs the terminal body with one hand. However, the present disclosure may not be limited to this, and the position of the rear input unit may be changeable.

When the rear input unit is disposed on the rear surface of the terminal body, a new user interface may be implemented using the rear input unit. Also, the aforementioned touch screen or the rear input unit may substitute for at least part of functions of the first manipulation unit 123a located on the front surface of the terminal body. Accordingly, when the first manipulation unit 123a is not disposed on the front surface of the terminal body, the display unit 151 may be implemented to have a larger screen.

On the other hand, the mobile terminal 100 may include a finger scan sensor which scans a user's fingerprint. The controller may use fingerprint information sensed by the finger scan sensor as an authentication means. The finger scan sensor may be installed in the display unit 151 or the user input unit 123.

The microphone 122 may be configured to receive the user's voice, other sounds, and the like. The microphone 122 may be provided at a plurality of places, and configured to receive stereo sounds.

The interface unit 160 may serve as a path allowing the mobile terminal 100 to interface with external devices. For example, the interface unit 160 may be at least one of a connection terminal for connecting to another device (for example, an earphone, an external speaker, or the like), a port for near field communication (for example, an Infrared DaAssociation (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b may be further mounted to the rear surface of the terminal body. The second camera 121b may have an image capturing direction, which is substantially opposite to the direction of the first camera unit 121a.

The second camera 121b may include a plurality of lenses arranged along at least one line. The plurality of lenses may be arranged in a matrix form. The cameras may be referred to as an 'array camera.' When the second camera 121b is implemented as the array camera, images may be captured in various manners using the plurality of lenses and images with better qualities may be obtained.

The flash 124 may be disposed adjacent to the second camera 121b. When an image of a subject is captured with the camera 121b, the flash 124 may illuminate the subject.

The second audio output module 152b may further be disposed on the terminal body. The second audio output module 152b may implement stereophonic sound functions in conjunction with the first audio output module 152a, and may be also used for implementing a speaker phone mode for call communication.

At least one antenna for wireless communication may be disposed on the terminal body. The antenna may be embedded in the terminal body or formed in the case. For example, an antenna which configures a part of the broadcast receiving module 111 (see Figure 1A) may be retractable into the terminal body. Alternatively, an antenna may be formed in a form of film to be attached onto an inner surface of the rear cover 103 or a case including a conductive material may serve as an antenna.

The terminal body is provided with a power supply unit 190 (see FIG. 1A) for supplying power to the mobile terminal 100. The power supply unit 190 may include a batter 191 which is mounted in the terminal body or detachably coupled to an outside of the terminal body.

The battery 191 may receive power via a power cable connected to the interface unit 160. Also, the battery 191 may be (re)chargeable in a wireless manner using a wireless charger. The wireless charging may be implemented by magnetic induction or electromagnetic resonance.

On the other hand, the drawing illustrates that the rear cover 103 is coupled to the rear case 102 for shielding the battery 191, so as to prevent separation of the battery 191 and protect the battery 191 from an external impact or foreign materials. When the battery 191 is detachable from the terminal body, the rear case 103 may be detachably coupled to the rear case 102.

An accessory for protecting an appearance or assisting or extending the functions of the mobile terminal 100 may further be provided on the mobile terminal 100. As one example of the accessory, a cover or pouch for covering or accommodating at least one surface of the mobile terminal 100 may be provided. The cover or pouch may cooperate with the display unit 151 to extend the function of the mobile terminal 100. Another example of the accessory may be a touch pen for assisting or extending a touch input onto a touch screen.

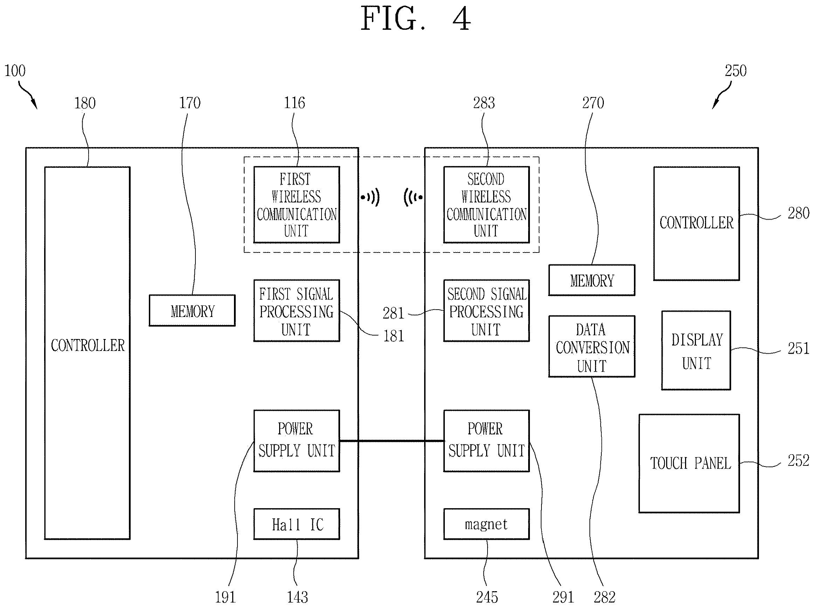

As described above, in the electronic device according to the present disclosure, a first wireless communication unit 116 (refer to FIG. 3C) that is provided on the rear side of the mobile terminal and a second wireless communication unit 283 that is provided on a first body 210 of the case 200 are configured to perform data communication with each other. A method of performing data communication between the first and second wireless communication units 116 and 283 will be described in more detail below referring to the accompanying drawings. FIG. 4 is a view for describing a method of control between the display units that are provided in the mobile terminal and the case, respectively, in the electronic device according to the present disclosure.

The mobile terminal 100 according to the present disclosure may be combined with the first body 210, and, in a case where the mobile terminal 100 is combined with the first body 210, the first and second wireless communication units 116 and 283 are configured to face each other.

The first wireless communication unit 116 that is provided in the mobile terminal 100 may be included in the wireless communication unit 110 that is described above referring to FIG. 3A. The wireless communication unit 110 of the mobile terminal 100 may be configured to be made up of a plurality of wireless communication units, and the plurality of wireless communication units may be arranged in different positions, respectively, in the mobile terminal 100. Particularly, in the mobile terminal 100 according to the present disclosure, the first wireless communication unit 116 may be provided on the rear side of the mobile terminal 100, and, in a case where the mobile terminal 100 is combined with the first body 210, may thus be configured to perform data communication with the second wireless communication unit 283 provided in the first body 210.

The first and second wireless communication units 116 and 283 according to the present disclosure may be configured with contactless connectors for data communication. The contactless connectors, as electromagnetic connectors that form electromagnetic communication links, are arranged in different devices, respectively, and thus, the electromagnetic communication links can be established.

The first and second wireless communication units 116 and 283 may be configured with transceivers for converting electric signals into electromagnetic (EM) signals. The transceiver that is any one of the first and second wireless communication units 116 and 283 can convert the electric signals into the EM signals, and the EM signals are received by the other transceiver. The other transceiver converts the EM signals into the electric signals.

On the other hand, according to the present disclosure, the term "transceiver" may refer to a device, such as an integrated circuit (IC) that includes a transmitter (Tx) and a receiver (Rx) such that the IC is used for transmitting and receiving information (data). Generally, the transceiver may be operable in a half-duplex mode (transmission and reception are alternately performed) and a full-duplex mode (transmission and reception are simultaneously performed) or may be configured as any one of a transmitter and a receiver. The transceiver may include separate integrated circuits for a transmission function and a reception function. The terms "contactless," "coupled-pair" and "proximity combination," as used in the present specification, are used to refer to implementation of electromagnetic (EM) connection and signal transfer rather than electricity (along a wired line or through contact) between the first and second wireless communication units 116 and 283. The term "contactless," as used in the present specification, may refer to a carrier-assisted, dielectric coupling system that has an optimal range at a distance ranging from 0 to 5 centimeters. The connection may be verified by the proximity of one of the first and second wireless communication units 116 and 283 to the other. Many contactless transmitters and receiver can occupy a small space. Unlike a wireless link over which normal broadcasting to several points is performed, the contactless link that is established in an electromagnetic (EM) manner is a point-to-point link.

The first and second wireless communication units 116 and 283 may make a wired connection in order to transmit data from one position to another position or may form a point-to-point contactless communication link or a coupled-pair that does not need a physically wired connection. The transceivers may be extremely high frequency (EHF) transceivers.

For example, in a case where the mobile terminal 100 is combined with the first body 210, the first wireless communication unit 116 of the mobile terminal 100 and the second wireless communication unit 283 in the first body 210 are configured to face each other and are configured to be positioned within a predetermined distance. Hence, the contactless communication link may be formed between the first and second wireless communication units 116 and 283.

Data may be transmitted between the mobile terminal 100 and the second display unit 250 through the EHF transceivers that are included in the first and second wireless communication units 116 and 283, respectively.

The second wireless communication unit 283 that transmits and receives data to and from the second display unit 250, that is, the EFH transceiver, as described referring to FIGs. 2A, 2B, and 2C, may be provided in the first body 210.

The second wireless communication unit 283 provided in the first body 210 is configured to transmit and receive data in a wired manner to and from the second display unit 250 through the wiring unit 242 included in the coupling unit 230.

On the other hand, as described above, the mobile terminal 100 is combined with the first body 210, and thus the EHF transceivers that are included in the first and second wireless communication units 116 and 283, respectively, may be combined in proximity with each other.

The coupled-pair of the EHF transceivers of each of the first and second wireless communication units 116 and 283 may provide a contactless data route, path, or channel. In some embodiments, the data paths may be unidirectional (for example, a flow of data from the mobile terminal 100 to the second display unit 250 through a specific path) or may be bidirectional (for example, a bidirectional flow of data between the mobile terminal 100 and the second display unit 150 through a specific path).

The first and second wireless communication units 116 and 283 according to the present embodiment may be configured to transmit and receive various types of pieces of data. Examples of the data may include graphic data, audio data, video data, touch event data, and a combination of these.

On the other hand, that is, the second display unit 250 provided in the second body 220 may be configured to operate on power that is supplied from the mobile terminal 100, and the power at this time, as described above, may be transferred up to the second display unit 250 through the wiring unit 242 provided in the first circuit board 243 and the coupling unit 230 that are electrically coupled to the mobile terminal 100, and an electrical coupling path for the second circuit board provided in the second body 220.

That is, as illustrated in FIG. 4, a power supply unit 191 of the mobile terminal 100 is configured to supply electric current (or power) for operation to a power supply unit 291 of the second display unit 250 through the wiring unit 242 provided in the first circuit board 243 and the coupling unit 230, and the electrical coupling path for the second circuit board provided in the second body 220.

On the other hand, as described above, the mobile terminal 100 may be detachably combined with the first body 210. Also, the mobile terminal may be formed to detect whether or not it is combined with the first body 210. For the detection, the magnet 245 may be provided on one surface of the first body 210, which faces the mobile terminal 100, and the hall sensor 143, which is formed such that the magnetic field corresponding to the magnet 245 is sensed in the case where the body of the mobile terminal is combined with the first body, may be included on the rear side of the mobile terminal. When the hall sensor senses the magnetic field, the mobile terminal recognizes that the mobile terminal is combined with the case and may perform predetermined control.

For example, when the magnetic field is sensed by the hall sensor 143, the controller 180 of the mobile terminal 100 may control the power supply unit 190 such that electric current for operation is supplied to the second display unit 250 that is provided in the second body 220.

That is, the second display unit 250 that is provided in the second body 220 may be configured to operate on power that is supplied from the mobile terminal 100.

In this manner, when electric current for operation is supplied to the second display unit 250, a system of the second display unit 250 can be booted and initialized and can be in a standby state where the system is operable.

At this time, the second display unit 250 may be in any one of the activated state and the inactivated state, and even in a state where the second display unit 250 is in the inactivated state, a touch sensor (or a touch panel 252) provided in the second display unit 250 may be configured to be driven in the activated state and to sense a touch that is applied to the second display unit 250.

On the other hand, in a case where the second display unit 250 is activated, the mobile terminal 100 transfers screen information (or a digital image signal) that is to be output on a display 251 provided in the second display unit 250, to the second wireless communication unit 283 side, through the first wireless communication unit 116. The image signal at this time, as described above, may be transmitted as a signal in a frequency band of 60 GHz in a wireless manner through a wireless connector.

The second display unit 250, as described above, can receive data (for example, a digital image signal or the like) from the first wireless communication unit 116 through the second wireless communication unit 283 and the second circuit board 244. At this time, the digital image signal can be converted by a data conversion unit 282 into data in a format that is possibly output on the second display unit 250. For example, the second display unit 250 may be configured with an LCD panel, and at this time, a digital image signal in a DP format, which is received from the mobile terminal 100, can be converted by the data conversion unit 282 into a data format (an MIPI format) that is receivable by an LCD panel and be transferred and output to and on the display 251.

On the other hand, types of pieces of data may be predetermined that are transmitted and received through the first and second wireless communication units 116 and 283. For example, only data that corresponds to an image signal can be transmitted and received through the first and second wireless communication units 116 and 283.

At this time, it is possible that signals necessary for transfer between the mobile terminal 100 and the second display unit 250, such as a communication control signal, a touch signal, and a brightness control signal, except for the image signal, go through the first and second signal processing units 181 and 281 through a multiple-input channel and are transmitted and received through the first circuit board 243 and the power terminal (for example, the pogo-pin) 249. On the other hand, it is possible that initialization or the like of the second display unit 250 is controlled by a controller included in the second display unit 250.

As described above, the mobile terminal according to the present disclosure can control information that is output on the display unit 250 provided in the case 200. That is, drive of the second display unit 250 is controlled by the mobile terminal 100.

At this time, the controller 180 may allocate at least one stack for controlling the second display unit 250 in the memory 170 in order to control the second display unit 250, and allocation of the stack may vary according to an activated or inactivated state of the second display unit 250.

The stack may have one of structures that cause data to pop. The structures that cause data to pop may be a stack format and a queue format. The stack may have a data structure for first-in last-out and the queue may have a data structure for first-in and first-out.

The controller 180 of the mobile terminal according to the present disclosure can cause a task to pop on different stacks according to a type of job that is to be performed.

According to the present disclosure, stacks can be distinguished according to the type of job that is to be performed. For example, i) a stack on which a task for performing a job associated with a home screen page is caused to pop, and ii) a stack on which a task for performing a job associated with an application is caused to pop may be different from each other.

On the other hand, an application may be configured with multiple tasks, and a task may be a unit function that is made to be a module in order to execute a specific application.

For example, a navigation application and an image viewer application are categorized as different tasks. Various operations within the navigation application may be present as activity units within a task of the navigation application.

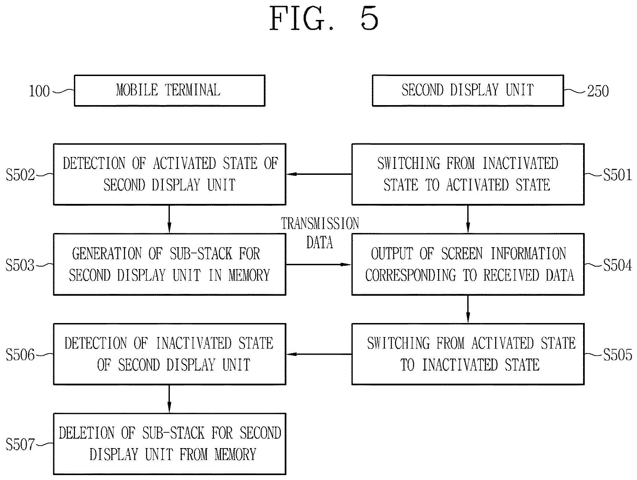

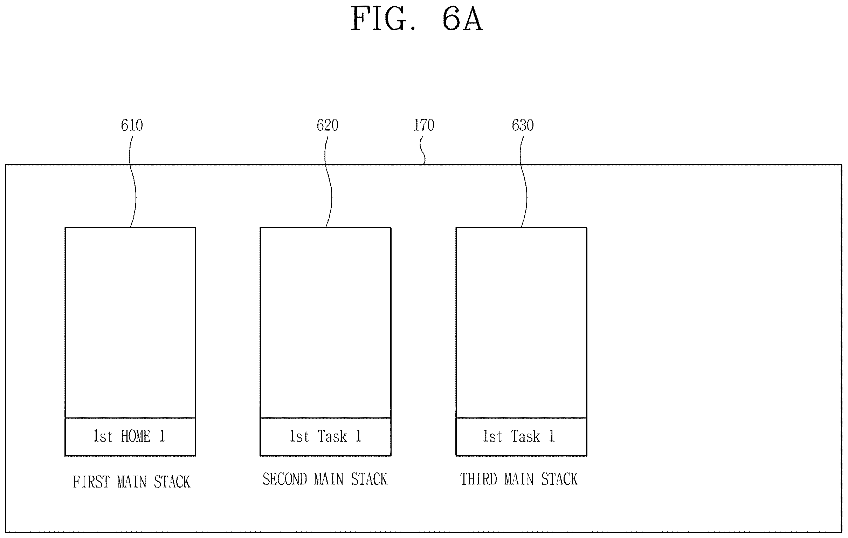

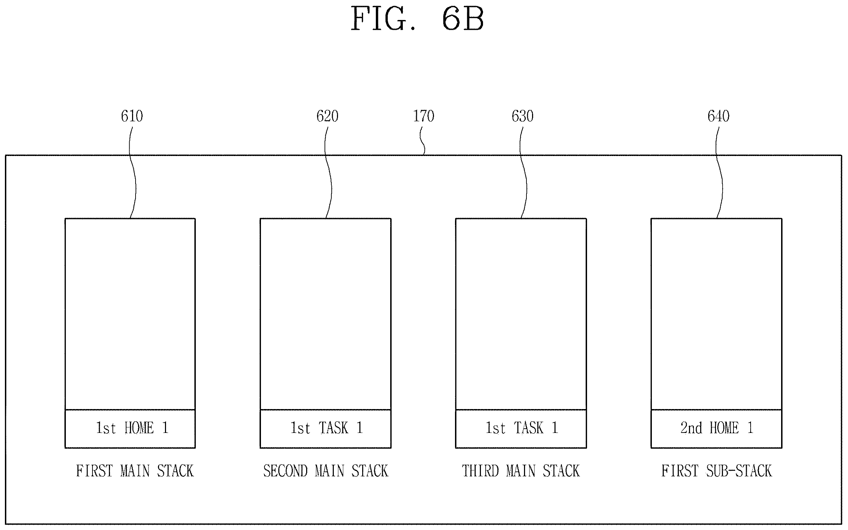

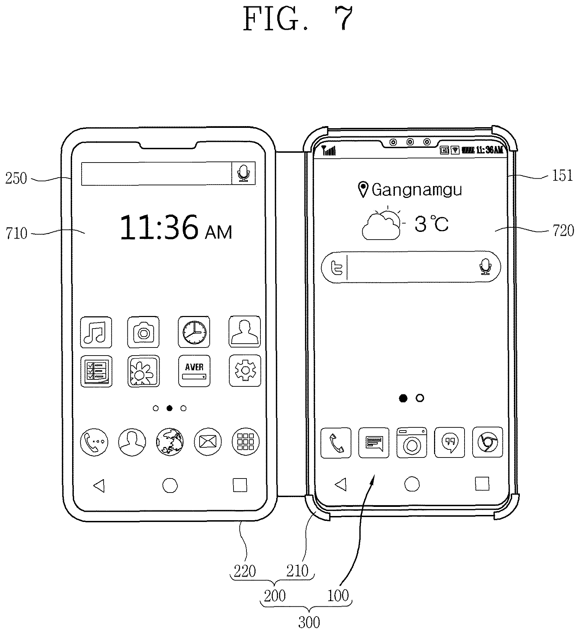

A method of allocating a stack for driving the second display unit 250 in the mobile terminal according to the present disclosure will be described in more detail referring to the accompanying drawings. FIG. 5 is a flowchart for describing the method of control between the display units that are provided in the mobile terminal and the case, respectively, in the electronic device according to the present disclosure. FIGs. 6A and 6B are conceptual views for describing a memory control method according to the present disclosure. FIG. 7 is a conceptual view for describing a scene where a home screen page is output in the electronic device according to the present disclosure.

First, as illustrated in FIG. 6A, at least one stack may be allocated in the memory 170 of the mobile terminal 100. Stacks may be categorized according to a job category (type) and be allocated in the memory 170. As illustrated in FIG. 7A, the stacks may be broadly categorized into a first main stack (or a main home stack) 610 that manages a task for the home screen page, a second main stack (a main app stack) 620 that manages execution of an application, and a third main stack (or a main recent app stack) 630 that manages a history of a recently-executed application.

In a case where an application that is executed in the foreground or the background in the mobile terminal 100 is not present, the second main stack 620 and the third main stack 630 may not be allocated and only the first main stack 610 may be allocated.

Also, in contrast, in a case where an application that is executed in the foreground or the background in the mobile terminal 100 is present, the second main stack 620 and the third main stack 630 may be allocated, but a task included in each stack may not be present.

On the other hand, in a state where the second display unit 250 is inactivated, a stack for the second display unit 250, as illustrated in FIG. 6A, may not be allocated in the memory 170 of the mobile terminal 100. That is, in the state where the second display unit 250 is inactivated, at least one of the first main stack 610, the second main stack 620, and the third main stack 630 may be allocated and be present.

That is, in the state where the second display unit 250 is inactivated, memory for the second display unit 250 is allocated in the memory 170.

However, in a state where the first display unit 151 is activated and in a state where the second display unit 250 is inactivated, when the second display unit 250 switches to the activated state based on an external input to the electronic device 300, or the like (S501), the controller 180 of the mobile terminal 100 may additionally allocate a stack for managing a screen that is output on the second display unit 250 and a function.

For example, in a case where a predetermined-type touch input for activating the second display unit 250 in the inactivated state is applied to the second display unit 250, the second display unit 250 switches to the activated state.

The controller 180 of the mobile terminal detects the activated state of the second display unit 250 (S502), and, based on the detection of the activated state of the second display unit 250, may generate at least one stack for the second display unit 250 in the memory, as illustrated in FIG. 6B.

The controller 180 of the mobile terminal may be configured to detect the activated state of the second display unit 250 based on the reception of the predetermined-type touch input.

That is, in the case where a touch is applied to the second display unit 250, the second display unit 250 may transfer a touch signal corresponding to the touch, to the mobile terminal 100. In a state where the second display unit 250 is in the inactivated state, in a case where a touch is detected, a touch signal corresponding to the detected touch may be transferred to the mobile terminal 100 side through the second wireless communication unit 283 described above.

Then, in the case where the touch to which the received touch signal corresponds is a predetermined-type touch, the mobile terminal 100 may transfer the control command to activate the second display unit 250 to the second display unit 250 side through the first wireless communication unit 116.

Based on the activation of the second display unit 250, the controller 180 of the mobile terminal may generate at least one stack for controlling information that is output through the second display unit 250, in the memory 170 (S503).

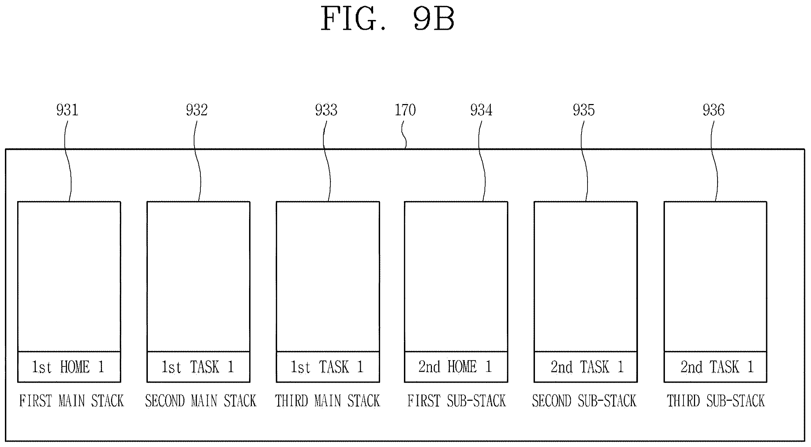

In more detail, based on the activation of the second display unit 250, the controller 180 of the mobile terminal may allocate at least one of i) a first sub-stack (or a sub-home stack) 640 that manages a task for the home screen page which is output on the second display unit 250, ii) a second sub-stack (or a sub-app stack) 935 (refer to FIG. 9B) that manages execution of an application, and iii) a third sub-stack (or a sub-recent app stack) 936 (refer to FIG. 9B) that manages a history of a recently-executed application, in the memory.

At this time, in a case where an application that is being output or was output on the second display unit 250 is not present, only the first sub-stack 640 may be allocated as illustrated in FIG. 6B.

The first sub-stack 640 is a stack associated with a job for the home screen page that is output on the second display unit 250, and according to the present disclosure, different home screen pages may be output to the mobile terminal 100 and the second display unit 250, respectively.

As illustrated in FIG. 7, a home screen page 710 that is output on the second display unit 250 may be a home screen page that is allocated separately for the second display unit 250.

In contrast, the home screen page that is output on the second display unit 250 may be any one of a plurality of home screen pages that are possibly output in the mobile terminal 100. At this time, the controller 180 of the mobile terminal may control stacks associated with the home screen page, which are included in the first main stack 610 and the first sub-stack 640, such that the same home screen page is not output in the first display unit 151 and the second display unit 250.

On the other hand, in a case where an application is executed on the second display unit 250 (or in a case where an execution screen for an application is output on the second display unit 250), the second sub-stack and the third sub-stack may be additionally allocated.

As described above, in a case where the second display unit 250 is activated and where a stack for the second display unit 250 is thus allocated in the memory, the controller 180 of the controller 180 transfers information included in a stack, to the second display unit 250 (S503). The information included in the stack may be transferred to the second display unit 250 through the first and second wireless communication units 116 and 283.

On the other hand, types of pieces of data may be predetermined that are transmitted and received through the first and second wireless communication units 116 and 283. For example, only data that corresponds to an image signal is transmitted and received through the first and second wireless communication units 116 and 283, and it is also possible that a touch signal is transferred to the mobile terminal 100 side through the first and second circuit boards 243 and 244. That is, it is possible that signals necessary for transfer between the mobile terminal 100 and the second display unit 250, such as a communication control signal, a touch signal, and a brightness control signal, except for the image signal, go through the first and second signal processing units 181 and 281 (refer to FIG. 4) through a multiple-input channel and are transmitted and received through the first circuit board 243 and the power terminal (for example, the pogo-pin) 249.

A coupling path for data at this time may be organically formed between the power supply unit 191 of the mobile terminal 100, the power terminal (for example, the pogo-pin) 249 of the first body 210, the wiring unit 242 provided in the first circuit board 243 and the coupling unit 230, the second circuit board provided in the second body 220, and the second display unit 250.

In this manner, in a state where the second display unit 250 is driven in the activated state, and where a stack for the second display unit 250 is thus allocated in the memory 170 of the mobile terminal, in a case where the second display unit 250 switches back to the inactivated state (S505), the controller 180 of the mobile terminal may delete a sub-stack generated for the second display unit 250, from the memory (S507).

That is, when the controller 180 of the mobile terminal detects the inactivated state of the second display unit (S506), the controller 180 may delete all sub-stacks associated with the second display unit from the memory.

That is, according to the present disclosure, only in a state where the second display unit is activated, a stack for controlling the second display unit is generated and the second display unit is driven independently of the operation of the mobile terminal. Then, in a case where the second display unit is inactivated, stacks associated with the second display unit 250 are all deleted from the memory, and thus a space in the memory 170, which is unnecessarily occupied by memory for the second display unit, can be reduced.

On the other hand, the controller 180 of the mobile terminal may be configured to detect the switching of the second display unit to the inactivated state based on switching of the electronic device 300 to the closes state or the touch input applied to the electronic device 300.

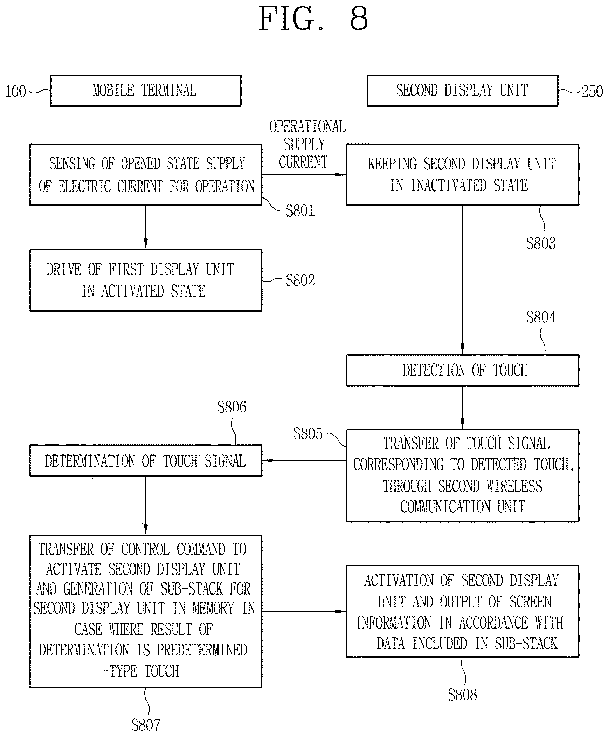

Referring to the accompanying drawings, a method of generating a stack associated with the second display unit will be described in more detail, considering a situation where the second display unit is activated. FIG. 8 is a flowchart for describing the method of control between the display units that are provided in the mobile terminal and the case, respectively, in the electronic device according to the present disclosure.

As described above referring to FIG. 1B, the electronic device 300 according to the present disclosure may be in any one of the opened state and the closed state. When the electronic device switches from the closed state to the opened state, the mobile terminal 100 may sense the opened state (S801).

That is, when the electronic device 300 switches from the closed state, as illustrated in (a) of FIG. 1B, to the opened state, as illustrated in (b) of FIG. 1B, at least one of the first and second display units 151 and 250 may switch to the activated state.

In more detail, the mobile terminal 100 may include the illumination sensor that is configured to sense ambient illumination, and the controller 180 of the mobile terminal 100 may sense any one of the closed state and the opened state according to illumination that is sensed by the illumination sensor.

When the mobile terminal 100 detects the opened state, the mobile terminal 100 may supply electric current for operation to the second display unit 250. The second display unit 250 provided in the second body 220 may be configured to operate on power that is supplied from the mobile terminal 100, and the power at this time, as described above, may be transferred up to the second display unit 250 through the wiring unit 242 provided in the first circuit board 243 and the coupling unit 230 that are electrically coupled to the mobile terminal 100, and the electrical coupling path for the second circuit board provided in the second body 220.

The power supply unit 191 (refer to FIG. 4) of the mobile terminal 100 is configured to supply electric current (or power) for operation to the power supply unit 291 of the second display unit 250 through the wiring unit 242 provided in the first circuit board 243 and the coupling unit 230 and the electrical coupling path for the second circuit board provided in the second body 220.

On the other hand, in the closed state, both the first display unit 151 and the second display unit 250 may be driven in the inactivated state and at least one of the first display unit 151 and the second display unit 250 may switch to the activated state while in the opened state.

In a case where the electronic device 300 switches from the closed state to the opened state, the first display unit 151 of the mobile terminal 100 may be in the activated state (S802).

On the other hand, while in the opened state, the second display unit 250 is in any one of the activated state and the inactivated state, and in a case where the switching from the closed state to the opened state takes place, an initial state of the second display unit 250 may be the inactivated state (S803).

On the other hand, even in the state where the second display unit 250 is in the inactivated state, the touch sensor (or the touch panel 252) provided in the second display unit 250 may be configured to be driven in the activated state and to sense a touch that is applied to the second display unit 250 (S804).

On the other hand, at this time, the first display unit 151 of the mobile terminal 100 may be kept driven in the activated state (S802). Various pieces of screen information may be output on the first display unit 151 and may be variously changed according to setting of a home screen page, an execution screen for an application, a webpage, a setting screen, or the like, or according to user's selection.

In a case where a touch is applied to the second display unit 250, the second display unit 250 may transfer a touch signal corresponding to the touch, to the mobile terminal 100. In the state where the second display unit 250 is in the inactivated state, in the case where a touch is detected (S804), a touch signal corresponding to the detected touch may be transferred to the mobile terminal 100 side through the second wireless communication unit 283.

Then, in the case where the touch to which the received touch signal corresponds is a predetermined-type touch, the mobile terminal 100 may transfer the control command to activate the second display unit 250 and the screen information (the image signal) that is to be output on the second display unit 250, to the second display unit 250 side through the first wireless communication unit 116.

Then, the controller of the second display unit 250 may activate the second display unit 250 based on a signal that is received from the mobile terminal 100, and may output a screen in accordance with the received screen information on the second display unit 250 (S808).

In more detail, the second display unit 250 may further a touch sensor that is configured to sense a touch which is applied to the second display unit 250, and, in a case where the touch that is applied to the second display unit 250 in the opened state corresponds to a predetermined-type touch, the display unit 250 may be driven in the activated state. When a touch is applied to the second display unit 250, a touch signal that corresponds to the touch may be transferred to the first wireless communication unit 116 through the second wireless communication unit 283. Then, the controller 180 of the mobile terminal may determine whether or not the touch signal received through the first wireless communication unit corresponds to the predetermined-type touch (S806), and, in a case where the result of the determination is that the touch signal is the predetermined-type touch, may transfer a control signal to activate the second display unit 250 and screen information to the second wireless communication unit through the first wireless communication unit.

In a case where the second display unit 250 is activated based on the touch that is applied to the second display unit 250, different home screen pages 710 and 720, as described referring to FIG. 7, can be output on the first and second display units 151 and 250, respectively.

That is, in the case where the touch to which the received touch signal corresponds is a predetermined-type touch, the mobile terminal 100 may transfer the control command to activate the second display unit 250 to the second display unit 250 side through the first wireless communication unit 116.

Based on the activation of the second display unit 250, the controller 180 of the mobile terminal may generate at least one stack for controlling information that is output through the second display unit 250, in the memory 170 (S807).

In more detail, based on the activation of the second display unit 250, the controller 180 of the mobile terminal may allocate at least one of i) the first sub-stack (or the sub-home stack) 640 that manages the task for the home screen page which is output on the second display unit 250, ii) the second sub-stack (or the sub-app stack) 935 (refer to FIG. 9B) that manages execution of an application, and iii) the third sub-stack (or the sub-recent app stack) 936 (refer to FIG. 9B) that manages a history of a recently-executed application, in the memory.

At this time, in the case where an application that is being output or was output on the second display unit 250 is not present, only the first sub-stack 640 may be allocated (refer to FIG. 6B).

The first sub-stack 640 is a stack associated with a job for the home screen page that is output on the second display unit 250, and according to the present disclosure, different home screen pages may be output to the mobile terminal 100 and the second display unit 250, respectively.

As described above, in the case where the second display unit 250 is activated and where a stack for the second display unit 250 is thus allocated in the memory, the controller 180 of the controller 180 transfers information included in a stack, to the second display unit 250. In this manner, the information included in the stack can be transferred to the second display unit 250 through the first and second wireless communication units 116 and 283, and screen information received from the mobile terminal can be output on the second display unit 250.

That is, in a case where a touch to the second display unit 250 corresponds to a touch for activating the second display unit 250, the controller 180 according to the present disclosure may activate the second display unit 250, may generate a stack for the second display unit 250, and may transfer information in accordance with the generated stack to the second display unit 250 side. In addition, the second display unit is activated under the control of the controller 180 and screen information in accordance with data included in the stack is output on the second display unit (S808).

On the other hand, types of pieces of data may be predetermined that are transmitted and received through the first and second wireless communication units 116 and 283. For example, only data that corresponds to an image signal is transmitted and received through the first and second wireless communication units 116 and 283, and it is also possible that a touch signal is transferred to the mobile terminal 100 side through the first and second circuit boards 243 and 244. That is, it is possible that signals necessary for transfer between the mobile terminal 100 and the second display unit 250, such as a communication control signal, a touch signal, and a brightness control signal, except for the image signal, go through the first and second signal processing units 181 and 281 (refer to FIG. 4) through a multiple-input channel and are transmitted and received through the first circuit board 243 and the power terminal (for example, the pogo-pin) 249.

A coupling path for data at this time may be organically formed between the power supply unit 191 of the mobile terminal 100, the power terminal (for example, the pogo-pin) 249 of the first body 210, the wiring unit 242 provided in the first circuit board 243 and the coupling unit 230, the second circuit board provided in the second body 220, and the second display unit 250.

Also, when the controller 180 of the mobile terminal detects the inactivated state of the second display unit, the controller 180 may delete all sub-stacks associated with the second display unit from the memory.

That is, according to the present disclosure, only in the state where the second display unit is activated, a stack for controlling the second display unit is generated and the second display unit is driven independently of the operation of the mobile terminal. Then, in the case where the second display unit is inactivated, stacks associated with the second display unit 250 are all deleted from the memory, and thus a space in the memory 170, which is unnecessarily occupied by the memory for the second display unit, can be reduced.

On the other hand, the controller 180 of the mobile terminal may be configured to detect the switching of the second display unit to the inactivated state based on switching of the electronic device 300 to the closed state or the touch input applied to the electronic device 300.

That is, in a case where switching from the opened state to the covered state takes place based on relative rotation of the first and second bodies 210 and 220, the second display unit 250 that is being driven in the activated state while in the opened state may be inactivated. Then, the sub-stack generated for the second display unit may be deleted from the memory of the mobile terminal, based on the switching from the opened state to the covered state.

On the other hand, in the electronic device according to the present disclosure, when it is detected that the second display unit 250 is electrically coupled to the mobile terminal, it is also possible that the controller 180 of the mobile terminal generates at least one stack for the second display unit 250 regardless of the inactivated state of the second display unit 250.

As described above, in the electronic device according to the present disclosure, the memory for controlling the display unit provided in the electronic device is allocated in the memory of the mobile terminal, and thus the display provided in the electronic device can be integrally controlled through the mobile terminal. That is, in the mobile terminal according to the present disclosure, a stack for controlling a function of the mobile terminal and a stack for controlling a function and a screen of the display provided in the electronic device can be allocated separately. Hence, according to the present disclosure, the display units that are provided in the mobile terminal and the electronic device, respectively, can be controlled independently of each other. That is, according to the present disclosure, the display units that are provided in the mobile terminal and the electronic device, respectively, can individually perform different functions. Hence, a user can be provided with a plurality of functions, whenever needed, through a plurality of displays that are electrically combined with each other.

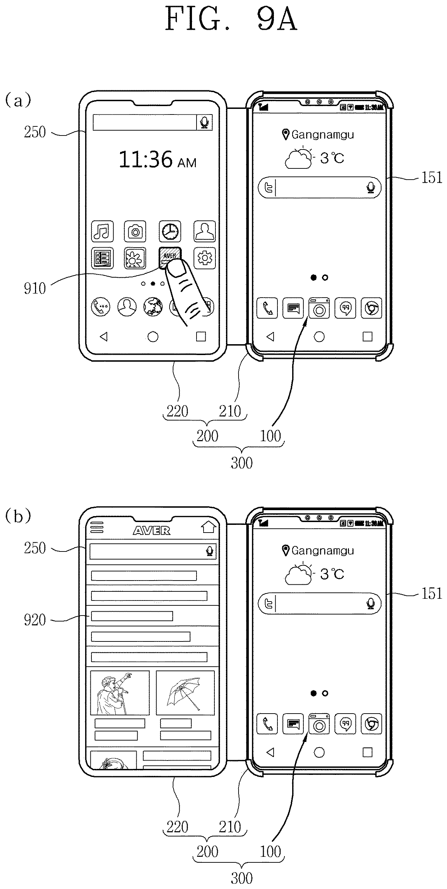

A memory control associated with the drive of the second display unit will be described in more detail below referring to the accompanying drawings. FIGs. 9A, 9B, 10A, 10B, 11A, 11B, 12A, 12B, 13A, 13B, 13C, 14A, 14B, and 14C are conceptual views for describing a memory allocation method according to the present disclosure.

As described in (a) of FIG. 9A, when an icon 910 for a specific application is selected from the home screen page on the second display unit 250, an execution screen 920 that corresponds to the selected application, as illustrated in FIG. 9B, can be output on the second display unit 250.

From the perspective of the memory, as described in (a) of FIG. 9B, when the icon 910 for the specific application is selected from the home screen page that is output on the second display unit 250, the controller 180, as illustrated in FIG. 9B, may allocate (or generate) the second sub-stack 935 (a stack associated with execution of an application) for managing an application that is executed on the second display unit 250 and the third sub-stack 936 (a stack for managing a history of a recently-executed application). At this time, a task (2nd task 1) that corresponds to an application which corresponds to the selected icon can be caused to pop on the second sub-stack 935 and the third sub-stack 936.

The controller 180 may store information associated with the application that corresponds to the selected icon, in each of the second sub-stack 935 and the 3-third sub-stack 936, and may control the first and second wireless communication units 116 and 283 such that the execution screen 920 which corresponds to the application is output on the second display unit 250, using the stored information.

That is, an image signal that corresponds to a screen information which is to be output on the second display unit 250 may be transferred from the mobile terminal 100 to the second display unit 250 through the first and second wireless communication units 116 and 283.

In this manner, the mobile terminal 100 according to the present embodiment separately allocates a stack for the screen information that is output on the second display unit 250, and thus may control the first display unit 151 and the second display unit 250 independently of each other.

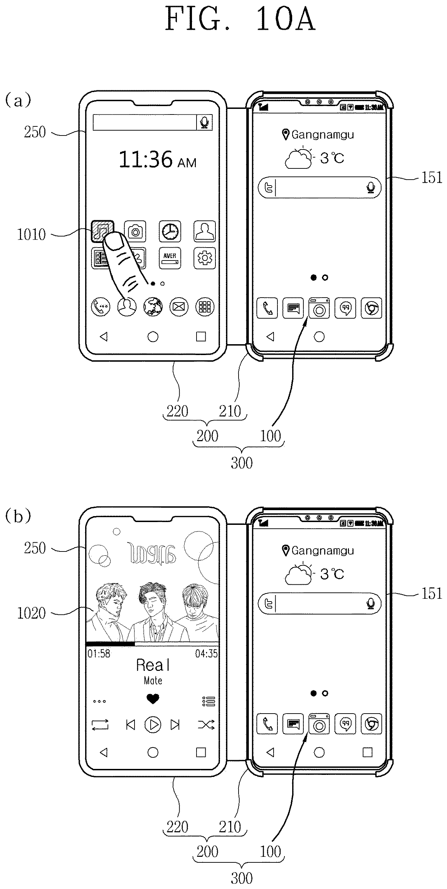

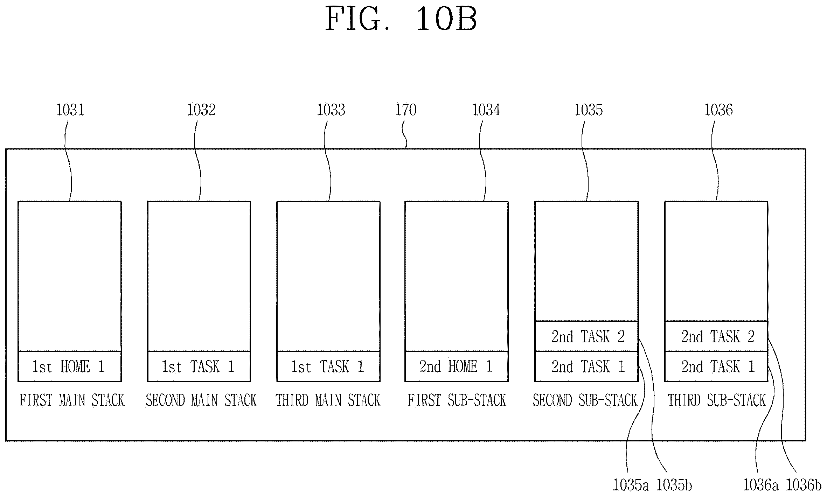

On the other hand, in a state where an application (hereinafter referred to as a first application) that corresponds to the selected icon is executed on the second display unit 250, an icon 1010 for another application (hereinafter referred to as a second application) is selected as illustrated in FIG. 10A, the controller 180 of the mobile terminal, as illustrated in FIG. 10B, may cause a task (2nd task 2) that corresponds to the second application to pop on each of the second sub-stack 935 and the third sub-stack 936. Screen information 1020 that corresponds to the second application, as illustrated in (b) of FIG. 10A, may be output on the second display unit 250.

At this time, the first application may be executed in the foreground. On the other hand, according to the present disclosure, a stack for driving the mobile terminal and a stack for driving the second display unit are separately allocated, and thus, execution of the first and second applications on the second display unit do not exert any influence on the drive of the mobile terminal.

In the same manner, execution of an application that is to be executed on the mobile terminal does not exert any influence on the second display unit 250.

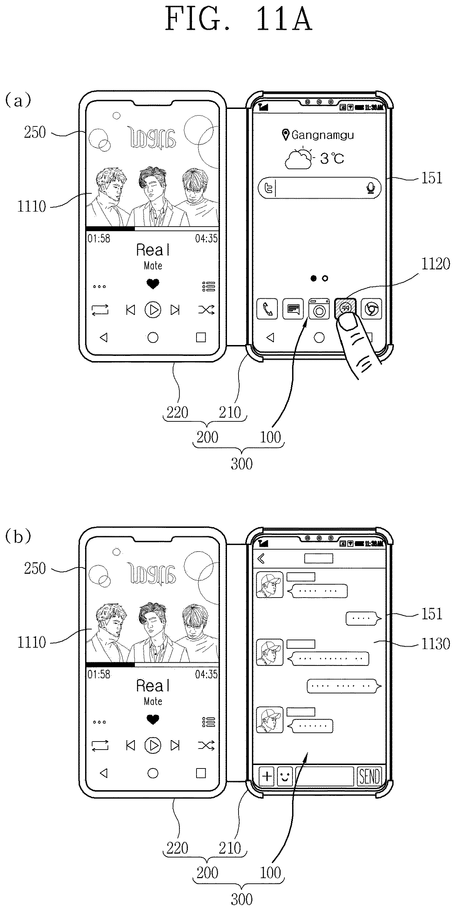

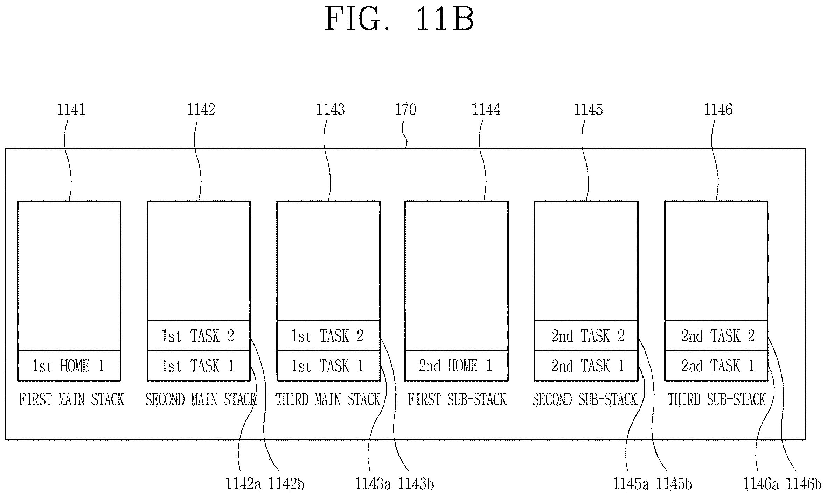

For example, as illustrated in (a) of FIG. 11A, when an icon 1120 for a specific application (hereinafter referred to as a third application) is selected from the display unit 151 of the mobile terminal, an execution screen 1130 for the third application, as illustrated in (b) of FIG. 11A, is output on the display unit 151 of the mobile terminal.

From the perspective of the memory, in a case where the icon for the third application is selected, at this time, a task (1st task 2) that corresponds to the third application may be caused to pop on each of a second main stack 1142 (a stack associated with execution of an application) and a third main stack 1143 (a stack for managing a history of a recently-executed application), in the memory.

In this manner, according to the present disclosure, a stack for driving the mobile terminal and a stack for driving the second display unit are separately allocated, and thus, execution of the first and second applications on the second display unit do not exert any influence on the drive of the mobile terminal.

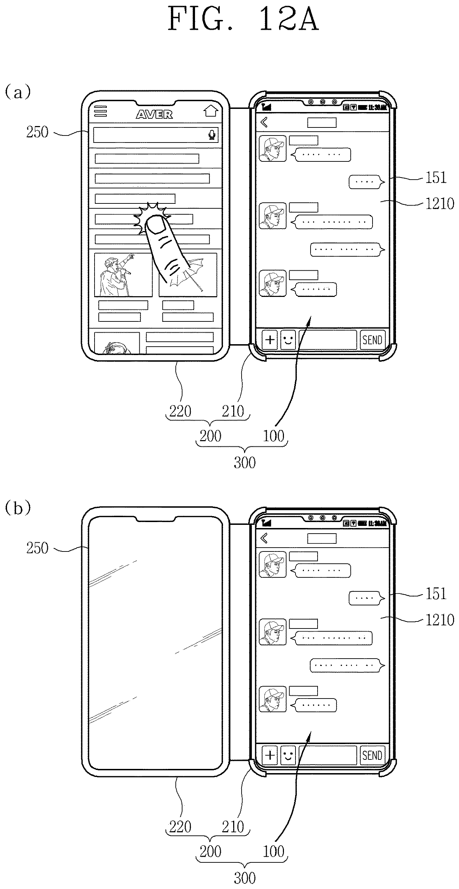

On the other hand, as illustrated in (a) and (b) of FIG. 12A, the second display unit 250 may be inactivated based on a touch that is applied to the second display unit 250 or on user's selection. Also, in a case where the electronic device 300 switches from the opened state to the closed state, the second display unit 250 may be inactivated.

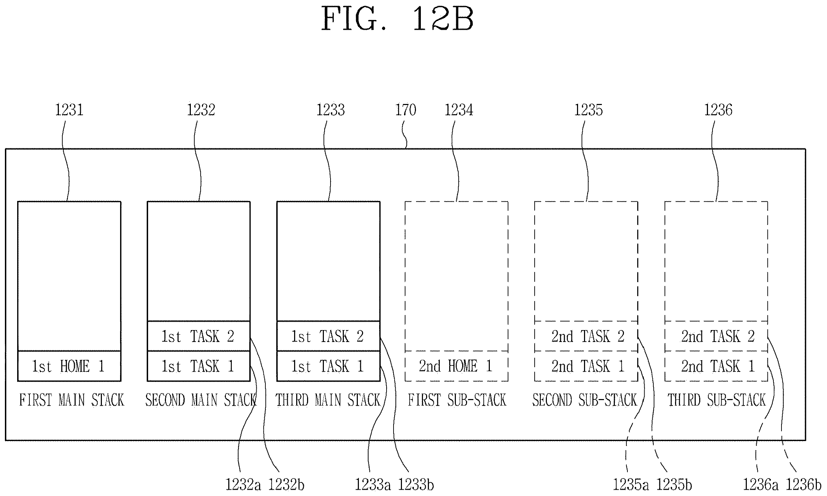

At this time, the controller 180, as illustrated in FIG. 12B, may delete a stack allocated (at least one of a first sub-stack 1234, a second sub-stack 1235, and a third sub-stack 1236), in order to manage at least one of an application that is executed on the second display unit 250 and screen information that is output on the second display unit 250. In a case where the second display unit 250 is activated back, the stack that is deleted in this manner may be allocated or generated back.

On the other hand, although a stack associated with the second display unit is deleted, this does not exert any influence on a stack relating to the mobile terminal.

As described above, the mobile terminal according to the present disclosure allocates a stack for controlling a screen of the second display unit 250, separately from a stack for controlling a screen of the first display unit 151, and thus may manage the first and second display units 151 and 250 independently of each other.

On the other hand, the electronic device 300 according to the present disclosure may move pieces of screen information that are output on the first and second display units 151 and 250, respectively, from one display unit to another, or may interchange the pieces of screen information.

That is, an execution screen for an application that is output on the second display unit 250 may move from the second display unit 250 to the first display unit 151 based on a predetermined-type touch input to the second display unit 250.

At this time, the controller may move the task for performing a function of the application, which is included in the second sub-stack, to the second main stack, based on the predetermined-type touch input.

According to the present disclosure, based on the predetermined-type touch input, the task included in the second sub-stack may move to the second main stack, and the task of the application that is included in the second main stack and the task subject to movement may be aligned in the second main stack.

On the other hand, in a case where tasks move from one stack to another, a task included in the one stack is deleted.

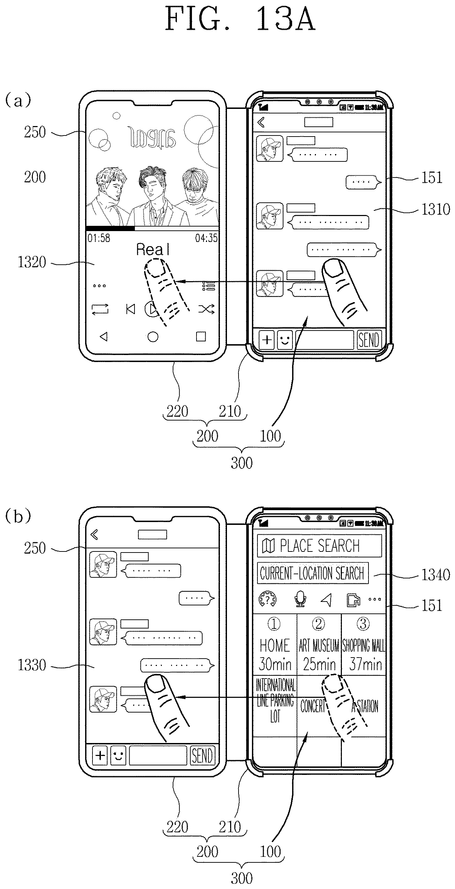

For example, as illustrated in FIG. 13A, in a case where a predetermined-type touch is applied to at least one of the first and second display units 151 and 250, screen information that is being output on one of the first and second display units 151 and 250 may be output on the other display unit.

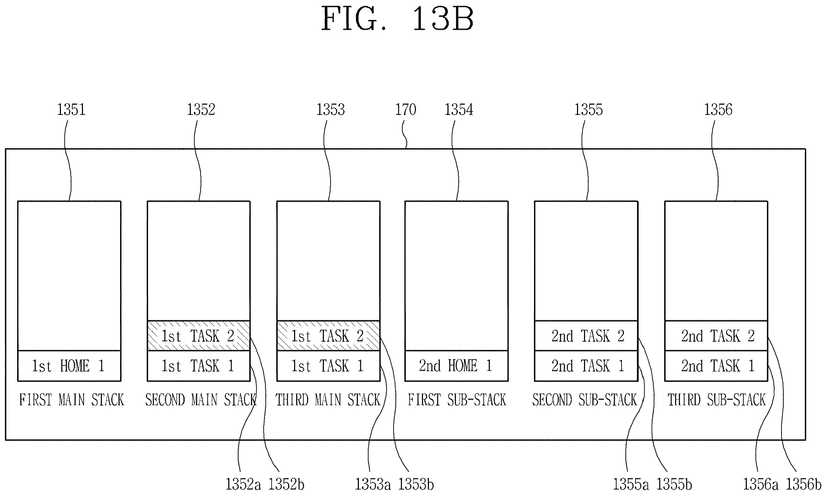

In more detail, as illustrated in (a) and (b) of FIG. 13A, when a predetermined-type touch (for example, a drag touch that starts on the first display unit 151 and ends on the second display unit 250) is applied to the first display unit 151, the controller 180, as illustrated in FIG.13B, may output screen information 1310 that, as illustrated in (a) of FIG. 13A, is being output on the first display unit 151, on the second display unit 250 (refer to the reference numeral '1330').

At this time, the controller may move tasks that correspond to the pieces of screen information 1310 and 1330, to stacks, respectively, that are allocated for the second display unit 250.

For example, in a case where the pieces of screen information 1310 and 1330 are execution screens for applications and where the predetermined-type touch is not yet applied, tasks 1352b and 1353b that correspond to the pieces of screen information 1310 and 1330, as illustrated in FIG. 13B, are included in a second main stack 1352 and a third main s tack 1353, respectively, in the memory 170.

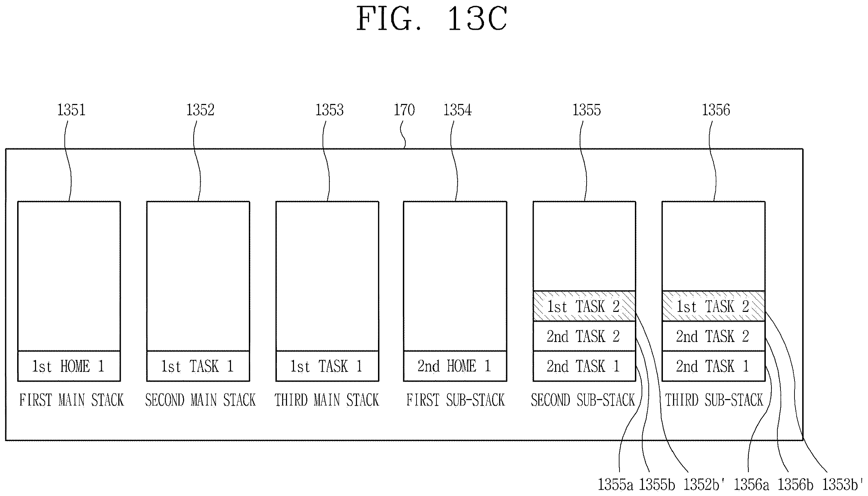

Then, as illustrated in (a) and (b) of FIG. 13A, when a predetermined-type touch (for example, a drag touch that starts on the first display unit 151 and ends on the second display unit 250) is applied to the first display unit 151, the controller 180, as illustrated in FIG. 13C, may move the tasks 1353b and 1353b that correspond to the screen information 1310 and 1330, to the second sub-stack 1355 and the third sub-stack 1356, respectively.

As a result, tasks 1352b' and 1353b' that correspond to the pieces of screen information, respectively, may be caused to pop on the second sub-stack 1355 and the third sub-stack 1356, respectively.

The tasks 1352b' and 1353b' that correspond to the pieces of screen information, respectively, may be caused to pop on the uppermost portions, respectively, of the second sub-stack 1355 and the third sub-stack 1356, and as a result, the screen information 1330 may be output on the second display unit 250. On the other hand, the screen information 1330, as in the examples described above, may be transferred from the mobile terminal 100 to the second display 250 through the first and second wireless communication units 116 and 283.

On the other hand, in the embodiment that moves the screen information described above, a control command for moving the screen information is generated in a case where a predetermined-type touch is applied, but the present disclosure is not limited to this.

That is, the control command for moving the screen information may be generated in a case where a touch key, a hardware key, or the like is selected that is provided on at least one of the mobile terminal and the second display unit 250.

On the other hand, in the above embodiment, the case is described where, in the state where an execution screen for an application is output on the display unit, when a predetermined-type touch is applied to the display unit, an execution screen that is output to one display unit is moved to the other display unit. In addition, according to the present disclosure, not only in a state where the execution screen is output, but also in a state where a list of applications that are recently executed on one display unit is output, in a case where a predetermined-type touch is applied to an item included in the list, a task of an application that corresponds to the item to which the predetermined type touch is applied may be moved to a stack that is allocated to the other display unit.

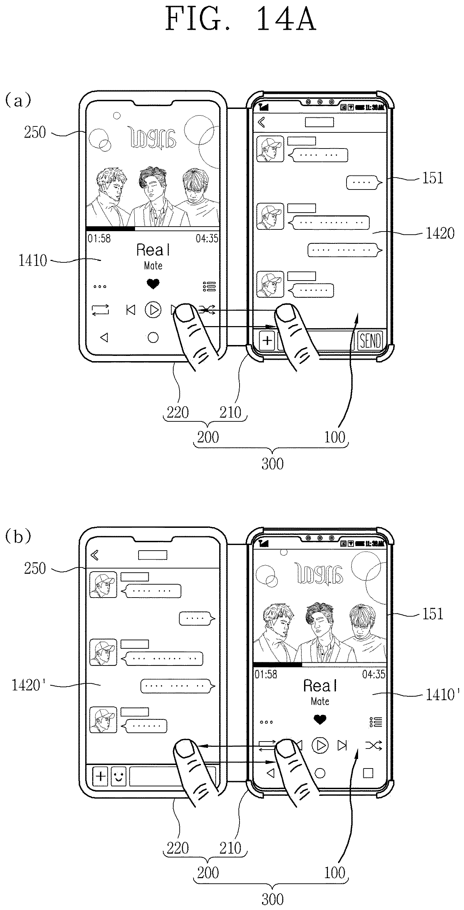

In addition, in the electronic device according to the present disclosure, as illustrated in (a) and (b) of FIG. 14A, based on a user's request, the screen information that is output on the first display unit 151 and the screen information that is output on the second display unit 250 may be interchangeably output. That is, according to the present disclosure, an application that is executed through the first display unit 151 and an application that is executed on the second display unit 250 may be interchangeably executed.

The user's request to do this may be received through a predetermined-type touch that is applied to at least one of the first and second display units 151 and 250 or may be received through a touch key, a hardware key, or the like that is provided on at least one of the mobile terminal and the second display unit 250.

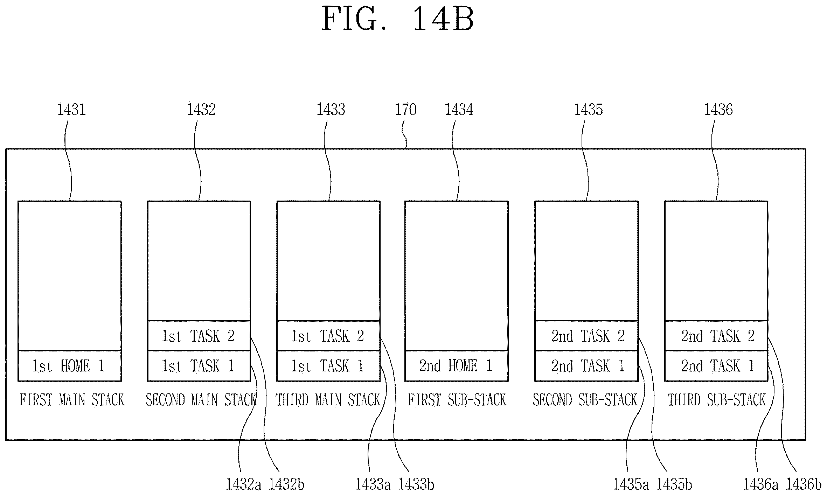

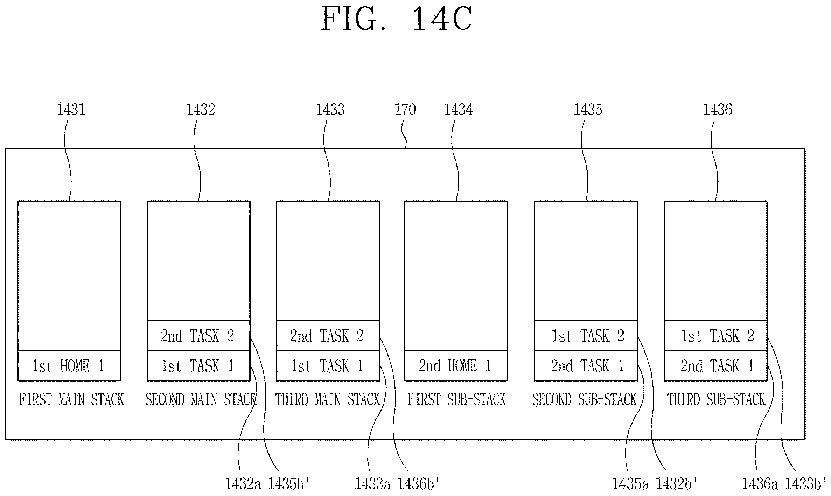

From the perspective of the memory, when a user's request to interchangeably move the pieces of screen information that are output on the first and second display units 151 and 250, respectively, the controller 180 of the mobile terminal, as illustrated in FIGs. 14B and 14C, may move stacks (for example, tasks 1432b and 1433b that are caused to pop on a second main stack 1432 and a third main stack 1433, respectively, which correspond to an application that is output on the first display unit 151) for controlling the mobile terminal, to stacks (for example, a second sub-stack 1435 and a third sub-stack 1436), respectively, that are allocated for the second display unit 250 (refer to the reference numerals 1432b' and 1433b' in FIG. 14C).

Also, conversely, when the user's request to interchangeably move the pieces of screen information that are output on the first and second display units 151 and 250, respectively, the controller 180 of the mobile terminal, as illustrated in FIGs. 14B and 14C, may move stacks (for example, tasks 1435b and 1436b that are caused to pop on the second sub-stack 1435 and the third sub-stack 1436, respectively, which correspond to an application that is output on the second display unit 250) for controlling the display unit 250, to stacks (for example, the second main stack 1432 and the third main stack 1433), respectively, that are allocated to control the mobile terminal (refer to the reference numerals 1435b' and 1436b' in FIG. 14C).

On the other hand, in the above embodiment described, the case is described where, in the state where an execution screen for an application is output on the display unit, when a predetermined-type touch is applied to the display unit, an execution screen that is output to one display unit is moved to the other display unit. In addition, according to the present disclosure, not only in the state where the execution screen is output, but also in the state where a list of applications that are recently executed on one display unit is output, in the case where a predetermined-type touch is applied to an item included in the list, a task of an application that corresponds to the item to which the predetermined type touch is applied may be moved to a stack that is allocated to the other display unit.

As described above, in an electronic device equipped with a mobile terminal according to the present disclosure includes a case that includes a first body with which the mobile terminal is combined and a second body in which a display unit is provided. The case includes a wireless communication unit such that wireless communication with the mobile terminal is possible, and the display unit provided in the second body can transmit and receive a control signal and data to and from the mobile terminal through the wireless communication unit provided in the case. Hence, according to the present disclosure, although a separate setting is not performed in order to control the display unit provided in the second body, communication with the communication unit provided in the second body can be performed only by combining the mobile terminal with the case.

In addition, in the mobile terminal and the electronic device equipped with the mobile terminal according to the present disclosure, memory for controlling the display unit provided in the electronic device is allocated in a memory of the mobile terminal, and thus a display provided in the electronic device can be integrally controlled through the mobile terminal.

In more detail, in the mobile terminal according to the present disclosure, a stack for controlling a function of the mobile terminal and a stack for controlling a function and a screen of the display provided in the electronic device can be separately allocated in the memory. Hence, according to the present disclosure, the display units that are provided in the mobile terminal and the electronic device, respectively, can be controlled independently of each other. That is, according to the present disclosure, the display units that are provided in the mobile terminal and the electronic device, respectively, can individually perform different functions. Hence, the user can be provided with a plurality of functions, whenever needed, through a plurality of displays that are electrically combined with each other.

## Claims

1. An electronic device comprising:
a mobile terminal; and
a case with the mobile terminal is combined,
wherein the mobile terminal includes
a terminal body that is combined with the case;
a memory that is positioned in the terminal body, and
a first body that includes a first display unit which is combined with the case and that is formed such that the case accommodates at least one portion of the terminal body,
a second body in which a second display unit is positioned, and
a wiring unit that electrically couples the first body and the second body and that is configured to transfer data received from the mobile terminal, to the second display unit, and
wherein, based on whether or not the second display unit is activated, a controller of the mobile terminal generates a sub-stack that includes a task associated with the second display unit.

2. The electronic device of claim 1,
wherein, the controller of the mobile terminal controls the memory of the mobile terminal such that the sub-stack is generated in a case where the second display unit is activated and such that the sub-stack is deleted in a case where the second display unit is inactivated.

3. The electronic device of claim 2, further comprising:
a coupling unit that couples the first and second bodies rotatably relative to each other,
wherein the first display unit and the second display unit are in any one of a closed state where the first display unit is covered by the second display unit and an opened state where the first display unit is not hidden by the second display unit,
wherein, based on rotation of the first and second bodies relative to each other, the second display unit that is being driven in an activated state while in the opened state is inactivated in a case where switching from the opened state to the covered state takes place, and
wherein, based on the switching from the opened state to the covered state, the sub-stack is deleted from the memory of the mobile terminal.

4. The electronic device of claim 3,
wherein the second display unit further includes a touch sensor that is configured to sense a touch which is applied to the second display unit,
wherein, in a case where a touch that is applied to the second display unit in the opened state corresponds to a predetermined-type touch, the second display unit is driven in the activated state, and
wherein, based on the touch that corresponds to the predetermined-type touch, the sub-stack is generated in the memory of the mobile terminal.

5. The electronic device of claim 1,
wherein, in a case where the first and second display units are both driven in an activated state, the memory of the mobile terminal includes
a first main stack for managing a home screen page that is output on the first display unit, and
a first sub-stack for managing a home screen page that is output on the second display unit.

6. The electronic device of claim 5,
wherein, in a case where an icon for a first application, which is included in the home screen page that is output on the first display unit, is selected, the memory further includes a second main stack that includes a first task for performing a function of the first application, and
wherein, in a case where an icon for a second application, which is included in a home screen page that is output on the second display unit, is selected, the controller generates a second sub-stack that includes a second task for performing a function of the second application, in the memory.

7. The electronic device of claim 6,
wherein an execution screen for the first application that corresponds to the first task included in the second main stack is output on the first display unit, and
wherein an execution screen for the second application that corresponds to the second task included in the second sub-stack is output on the second display unit.

8. The electronic device of claim 6,
wherein the memory further includes
a third main stack for storing history information associated with the first application selected from the first display unit, and
a third sub-stack for storing history information associated with the second application selected from the second display unit.

9. The electronic device of claim 8,
wherein, based on inactivation of the second display unit, the controller controls the memory of the mobile terminal such that the first, second, and third sub-stacks are deleted.

10. The electronic device of claim 7,
wherein, based on a predetermined-type touch input to the second display unit, the execution screen for the second application, which is output on the second display unit, moves from the second display unit to the first display unit, and
wherein, based on the predetermined-type touch input, the controller moves the second task for performing the function of the second application, which is included in the second sub-stack, to the second main stack.

11. The electronic device of claim 10,
wherein, based on the predetermined-type touch input, the first task for performing the function of the first application and the second task for performing the function of the second application are aligned in the second main stack, and the second task for performing the function of the second application is deleted from the second sub-stack.

12. The electronic device of claim 7,
wherein in response to reception of a predetermined-type control command, the controller performs switching between the execution screen for the first application that is output on the first display unit and the execution screen for the second application that is output on the second display unit, and
wherein, based on the predetermined-type control command, the first task for performing the function of the first application, which is included in the second main stack is moved to the second sub-stack, and the second task for performing the function of the second application, which is included in the second sub-stack, is moved to the second main stack.

13. The electronic device of claim 1,
wherein the mobile terminal further includes a first wireless communication unit that transmits a wireless signal to a rear side of the terminal body,
wherein the case includes a second wireless communication unit that is positioned to face the first wireless communication unit in the first body and receives the wireless signal, and
wherein the controller of the mobile terminal transfers data included in the sub-stack to the second display unit through an electrical coupling path that is formed by the first wireless communication unit, the second wireless communication unit, and the wiring unit.

14. The electronic device of claim 13,
wherein screen information that is to be output on the second display unit is transferred from the sub-stack included in the memory of the mobile terminal to the second display unit through the first wireless communication unit, the second wireless communication unit, and the wiring unit.

15. The electronic device of claim 1,
wherein a magnet is provided on one surface of the first body, which faces the mobile terminal,
wherein a hall sensor, which is formed such that a magnetic field corresponding to the magnet is sensed in a case where the terminal body is combined with the first body, is included on a rear side of the mobile terminal, and
wherein, in a case where the magnetic field corresponding the magnet is sensed through the hall sensor, the controller of the mobile terminal supplies electric current for operation to the second display unit through the wiring unit.
